# EUROPEAN PATENT SPECIFICATION

(11) **EP 3 832 578 B1**
(45) Date of publication and mention of the grant of the patent: **16.04.2025**
(21) Application number: 20767121.5
(22) Date of filing: 19.02.2020
(51) Int. Cl.: G06Q 30/04, G06F 16/27

(54) **ELECTRONIC INVOICE IDENTIFIER ALLOCATION METHOD, AND ELECTRONIC TICKET GENERATING METHOD, DEVICE AND SYSTEM**
VERFAHREN ZUR ZUWEISUNG EINES ELEKTRONISCHEN RECHNUNGSIDENTIFIKATORS UND VERFAHREN, VORRICHTUNG UND SYSTEM ZUR ERZEUGUNG EINES ELEKTRONISCHEN TICKETS
PROCÉDÉ D'ATTRIBUTION D'IDENTIFIANT DE FACTURE ÉLECTRONIQUE, ET PROCÉDÉ, DISPOSITIF ET SYSTÈME DE PRODUCTION DE TICKET ÉLECTRONIQUE

(30) Priority: 06.03.2019 CN 201910168483
(43) Date of publication of application: 09.06.2021
(73) Proprietor: Tencent Technology (Shenzhen) Company Limited, Shenzhen, Guangdong, 518057 (CN)
(72) Inventor: ZHENG, Luohai, Shenzhen, Guangdong 518057 (CN); LU, Jiguang, Shenzhen, Guangdong 518057 (CN); ZHOU, Wangsheng, Shenzhen, Guangdong 518057 (CN); ZHANG, Jianjun, Shenzhen, Guangdong 518057 (CN); SHI, Junjie, Shenzhen, Guangdong 518057 (CN); CHEN, Hujia, Shenzhen, Guangdong 518057 (CN); ZANG, Jun, Shenzhen, Guangdong 518057 (CN); DAI, Chuanbing, Shenzhen, Guangdong 518057 (CN); QIN, Qing, Shenzhen, Guangdong 518057 (CN); CAI, Yige, Shenzhen, Guangdong 518057 (CN)
(74) Representative: Eisenführ Speiser
(86) International application number: PCT/CN2020/075845
(87) International publication number: WO 2020/177533

(56) References cited:
- WO-A1-01/41097
- CN-A- 104 219 321
- CN-A- 104 851 031
- CN-A- 105 096 172
- CN-A- 105 608 165
- CN-A- 106 934 673
- CN-A- 107 862 615
- CN-A- 109 949 111
- ANONYMOUS: "Load balancing (computing) - Wikipedia", 8 February 2019 (2019-02-08), XP055873426, Retrieved from the Internet <URL:https://en.wikipedia.org/w/index.php?title=Load_balancing_(computing)&oldid=882401945> [retrieved on 20211215]
- ANONYMOUS: "Data synchronization - Wikipedia", 22 February 2019 (2019-02-22), XP055873345, Retrieved from the Internet <URL:https://en.wikipedia.org/w/index.php?title=Data_synchronization&direction=prev&oldid=887080147> [retrieved on 20211215]

## Description

### RELATED APPLICATION

The present disclosure claims priority to Chinese Patent Application No. 201910168483.9, filed with the China National Intellectual Property Administration on March 6, 2019 and entitled "METHOD FOR ALLOCATING ELECTRONIC-BILL IDENTIFIER, AND METHOD, APPARATUS, AND SYSTEM FOR GENERATING ELECTRONIC BILL.

### FIELD OF THE TECHNOLOGY

The present disclosure relates to the field of the technical field of distributed systems, and in particular, to allocation of an electronic-bill identifier and generation of an electronic bill.

### BACKGROUND OF THE DISCLOSURE

With the development of Internet technologies, an increasing number of merchants tend to apply for an electronic-bill identifier via the Internet. Requests for applying for electronic-bill identifiers from the merchants may be serially processed by a single machine. Such manner can hardly deal with massive concurrent requests for applying for electronic-bill identifiers, and thereby reduces efficiency of allocating electronic-bill identifiers. In order to cope with massive concurrent requests for applying for electronic-bill identifiers, manners for allocating electronic-bill identifiers based on distributed systems emerge on requirement. For example, WO0141097 A1 discloses a system for facilitating payment for goods, where unique codes are generated based on purchase and sale information transmitted to a main computer. The distribution of computing workload across multiple computing resources in order to avoid the overload of any single resource is in general known in the art, see for example the article "Load balancing (computing)" in Wikipedia (URL: "https://en.wikipedia.org/w/index.php?title=Load_balancing_(computing)&oldid=882401945").

The distributed system includes multiple processing nodes that are configured to allocate electronic-bill identifiers. An electronic-bill identifier allocated by the each processing node is unique, so as to ensure data consistency among the processing nodes. Thereby, an electronic bill can be uniquely identified based on the electronic-bill identifier.

### SUMMARY

The invention is set out in the independent claims. A method for allocating an electronic-bill identifier, a method, an apparatus, and a system for generating an electronic bill, a computer device, and a storage medium are provided according to embodiments of the present disclosure, so as to address an issue that universality of allocating electronic-bill identifiers based on a distributed system is poor in conventional technology.

Technical solutions according to embodiments of the present disclosure are as follows.

A method for allocating an electronic-bill identifier is provided according to an aspect of embodiments of the present disclosure. The method is applied to a distributed system. The distributed system includes processing nodes, and the method is performed by a processing node of the processing nodes. The method includes:
receiving a request for applying for an electronic-bill identifier, where the request is initiated by a service node;
generating a set of electronic-bill identifiers in response to the request, where the set of electronic-bill identifiers includes at least one electronic-bill identifier, each of which includes a bill code and a bill number;
synchronizing, among the distributed system, the at least one electronic-bill identifier in the set of electronic-bill identifiers; and
allocating one of the at least one electronic-bill identifier in the set of electronic-bill identifiers to the service node, after the one of the at least one electronic-bill identifier in the set of electronic-bill identifiers is synchronized among the distributed system.

A method for generating an electronic bill is provided according to another aspect of embodiments of the present disclosure. The method is applied to a service node that interacts with a distributed system. The distributed system includes a processing node. The method includes:
receiving, by the service node, a request for issuing an electronic bill, where the request for issuing an electronic bill is initiated by a request initiator;
obtaining, by the service node, bill issuing information from the request for issuing an electronic bill, where the bill issuing information includes an identifier of a recipient and an amount of transferred resources;
initiating, by the service node, a request for applying for an electronic-bill identifier toward the processing node, according to the request for issuing the electronic bill;
obtaining, by the service node, the electronic-bill identifier from a set of electronic-bill identifiers allocated by the processing node, where the set of electronic-bill identifiers is generated by the processing node and synchronized among the distributed system, and the electronic-bill identifier includes a bill code and a bill number;
generating, by the service node, the electronic bill according to the bill issuing information and the obtained electronic-bill identifier; and
returning, by the service node, the electronic bill to the request initiator in response to the request for issuing the electronic bill.

An apparatus for allocating an electronic-bill identifier is provided according to another aspect of embodiments of the present disclosure. The apparatus is deployed at a processing node in a distributed system. The apparatus includes:
an application-request receiving module, configured to receive a request for applying for an electronic-bill identifier, where the request is initiated by a service node;
an electronic-bill-identifier generation module, configured to generate a set of electronic-bill identifiers in response to the request, where the set of electronic-bill identifiers includes at least one electronic-bill identifier, each of which includes a bill code and a bill number;
an electronic-bill-identifier synchronization module, configured to synchronize, among the distributed system, the at least one electronic-bill identifier in the set of electronic-bill identifiers; and
an electronic-bill-identifier allocation module, configured to allocate one of the at least one electronic-bill identifier in the set of electronic-bill identifiers to the service node, after the one of the at least one electronic-bill identifier in the set of electronic-bill identifiers is synchronized among the distributed system.

An apparatus for generating an electronic bill is provided according to another aspect of embodiments of the present disclosure. The apparatus is deployed at a service node that interacts with a distributed system. The distributed system includes a processing node. The apparatus includes:
an issuing-request receiving module, configured to: receive a request for issuing an electronic bill, where the request for issuing an electronic bill is initiated by a request initiator; and obtain bill issuing information from the request for issuing an electronic bill, where the bill issuing information includes an identifier of a recipient and an amount of transferred resources;
an initiating module, configured to initiate a request for applying for an electronic-bill identifier toward the processing node, according to the request for issuing the electronic bill;
an electronic-bill-identifier obtaining module, configured to obtain the electronic-bill identifier from a set of electronic-bill identifiers allocated by the processing node, where the set of electronic-bill identifiers is generated by the processing node and synchronized among the distributed system, and the electronic-bill identifier includes a bill code and a bill number;
an electronic-bill generation module, configured to generate the electronic bill according to the bill issuing information and the obtained electronic-bill identifier; and
an electronic-bill sending module, configured to return the electronic bill to the request initiator in response to the request for issuing the electronic bill.

A system for generating an electronic-bill is provided according to another aspect of embodiments of the present disclosure. The system includes a request initiator, a service node, and a processing node that is in a distributed system, where:
the service node is configured to initiate a request for applying for an electronic-bill identifier toward the processing node;
the processing node is configured to generate a set of electronic-bill identifiers according to an issuing quantity of electronic bills in response to the request for applying for the electronic-bill identifier, synchronize the set of electronic-bill identifiers among the distributed system, and allocate the electronic-bill identifier in the set of electronic-bill identifiers to the service node, where the electronic-bill identifier includes a bill code and a bill number;
the request initiator is configured to initiate a request for issuing an electronic bill toward the service node, where the request for issuing the electronic bill carries bill issuing information, and the bill issuing information includes an identifier of a recipient and an amount of transferred resource; and
the service node is further configured to obtain the electronic-bill identifier from the set of electronic-bill identifiers in response to the request for issuing the electronic bill, generate the electronic bill according to the bill issuing information and the obtained electronic-bill identifier, and return the electronic bill to the request initiator.

A method for allocating an electronic-bill identifier is provided according to another aspect of embodiments of the present disclosure. The method is applied to a distributed system including a proxy node and processing nodes. The method is performed by the proxy node. The method includes:
receiving a request for applying for an electronic-bill identifier, where the request is initiated by a service node;
selecting a processing node for receiving the request, from the processing nodes in the distributed system; and
distributing the request to the selected processing node, to enable the processing node to execute a service of allocating the electronic-bill identifier in response to the request for applying for the electronic-bill identifier.

An apparatus for allocating an electronic-bill identifier is provided according to an aspect of embodiments of the present disclosure. The apparatus is deployed at a proxy node in a distributed system. The apparatus includes:
an identifier-application-request receiving module, configured to receive a request for applying for an electronic-bill identifier, where the request is initiated by a service node;
a processing-node selection module, configured to select a processing node for receiving the request, from the processing nodes in the distributed system; and
an identifier-application-request distribution module, configured to distribute the request to the selected processing node, to enable the processing node to execute a service of allocating the electronic-bill identifier in response to the request for applying for the electronic-bill identifier.

A system for generating an electronic-bill is provided according to another aspect of embodiments of the present disclosure. The system includes a request initiator, a service node, and processing nodes and a proxy node that are in a distributed system, where:
the request initiator is configured to initiate a request for issuing an electronic bill toward the service node, where the request for issuing the electronic bill carries bill issuing information, and the bill issuing information includes an identifier of a recipient and an amount of transferred resource;
the service node is configured to initiate a request for applying for an electronic-bill identifier toward the proxy node, in response to the request for issuing the electronic bill;
the proxy node is configured to: select processing node for receiving the request for applying for the electronic-bill identifier, from the processing nodes in the distributed system; and distribute the request for applying for the electronic-bill identifier to the selected processing node;
the processing node is configured to: generate a set of electronic-bill identifiers according to an issuing quantity of electronic bills, in response to the request for applying for the electronic-bill identifier; synchronize the set of electronic-bill identifiers among the distributed system; and allocate the electronic-bill identifier in the set of electronic-bill identifiers to the proxy node, where the electronic-bill identifier includes a bill code and a bill number;
the proxy node is further configured to return, to the service node, the electronic-bill identifier allocated by the processing node; and
the service node is further configured to generate the electronic bill according to the bill issuing information and the obtained electronic-bill identifier, and return the electronic bill to the request initiator.

A computer device is provided according to another aspect of embodiments of the present disclosure. The computer device includes a processor and a memory. The memory stores computer-readable instructions. The computer-readable instructions when executed by the processor implement any foregoing method for allocating the electronic-bill identifier or forgoing method for generating the electronic bill.

A storage medium is provided according to another aspect of embodiments of the present disclosure. The storage medium stores a computer program. The computer program, when executed by a processor implements any foregoing method for allocating the electronic-bill identifier or forgoing method for generating the electronic bill.

A computer program product including instructions is provided according to another aspect of embodiments of the present disclosure. The instructions when run on a computer configure the computer to perform any foregoing method for allocating the electronic-bill identifier or forgoing method for generating the electronic bill.

Hereinabove technical solutions are provided. The processing node in the distributed system receives the request for applying for the electronic-bill identifier initiated by the service node, generates the set of electronic-bill identifiers in response to the request for applying for the electronic-bill identifier, and synchronizes the electronic-bill identifiers in the set of electronic-bill identifiers among the distributed system. After the electronic-bill identifier is synchronized among the distributed system, the processing node allocates the electronic-bill identifier to the service node. The set of electronic-bill identifiers is formed by at least one electronic-bill identifier including the bill code and the bill number. On such basis, data consistency among the processing nodes is ensured through synchronization on all processing nodes in the distributed system. Moreover, the bill codes meeting a bill issuing rule can improve effectively universality of the electronic-bill identifiers allocated based on the distributed system.

The above general description and the following detailed description are merely for exemplary and explanatory purposes, and do not limit the present disclosure.

### BRIEF DESCRIPTION OF THE DRAWINGS

Drawings are incorporated as a part of the specification, illustrate embodiments consistent with the present disclosure, and are intended for explaining principles of the present disclosure in conjunction with the specification.
Figure 1 is schematic diagrams of implementation environments according to an embodiment of the present disclosure;
Figure 2 is a block diagram of a hardware structure of a server according to an embodiment of the present disclosure;
Figure 3 is a flowchart of a method for allocating an electronic-bill identifier according to an embodiment of the present disclosure;
Figure 4 is a flowchart of step 330 in an embodiment corresponding to Figure 3 according to an embodiment of the present disclosure;
Figure 5 is a flowchart of step 331 in an embodiment corresponding to Figure 4 according to an embodiment of the present disclosure;
Figure 6 is a flowchart of step 333 in an embodiment corresponding to Figure 4 according to an embodiment of the present disclosure;
Figure 7 is a flowchart of step 3331 in an embodiment corresponding to Figure 6 according to an embodiment of the present disclosure;
Figure 8 is a flowchart of step 3333 in an embodiment corresponding to Figure 6 according to an embodiment of the present disclosure;
Figure 9 is a flowchart of step 3331 in an embodiment corresponding to Figure 3 according to another embodiment of the present disclosure;
Figure 10 is a flowchart of step 3333 in an embodiment corresponding to Figure 6 according to another embodiment of the present disclosure;
Figure 11 is a flowchart of step 350 in an embodiment corresponding to Figure 3 according to an embodiment of the present disclosure;
Figure 12 is a flowchart of another method for allocating an electronic-bill identifier according to an embodiment of the present disclosure;
Figure 13 is a flowchart of step 610 in an embodiment corresponding to Figure 12 according to an embodiment of the present disclosure;
Figure 14 is a flowchart of a method for generating an electronic bill according to an embodiment of the present disclosure;
Figure 15 is a schematic diagram of an electronic bill according to an embodiment of the present disclosure;
Figure 16 is a sequence diagram of a reimbursement process of an electronic bill in an application scenario according to an embodiment of the present disclosure;
Figure 17 is a schematic diagram of deploying processing nodes in a distributed system according to regional distribution of merchants in an application scenario according to an embodiment of the present disclosure;
Figure 18 is a block diagram of an apparatus for allocating an electronic-bill identifier according to an embodiment of the present disclosure;
Figure 19 is a block diagram of an apparatus for generating an electronic bill according to an embodiment of the present disclosure; and
Figure 20 is a block diagram of a computer device according to an embodiment of the present disclosure.

Embodiments in the present disclosure are clearly shown in the foregoing drawings, and hereinafter would be described in more details. The drawings and literal descriptions are not intended to limit the scope of concepts of the present disclosure in any manner, but illustrate the concepts of the present disclosure to those skilled in the art with reference to specific embodiments.

### DESCRIPTION OF EMBODIMENTS

Embodiments are described in detail herein, and examples of the embodiments are shown in the drawings. Unless otherwise indicated, same numbers in different drawings represent same or similar elements when following description refers to the drawings. Implementations described in following embodiments do not represent all implementations that are consistent with the present disclosure, but merely represent examples of apparatuses and methods that are described in detail in the appended claims and that are consistent with some aspects of the present disclosure.

As described above, an electronic-bill identifier allocated based on a distributed system is unique. Thereby, an electronic bill can be uniquely identified based on the electronic-bill identifier, ensuring data consistency among processing nodes in the distributed system.

At present, before the electronic-bill identifier is allocated based on the distributed system, non-repeating random numbers may be generated, or universal and unique identifiers that do not conflict with each other, i.e. a globally unique identifier, may be created. The random number or the globally unique identifier serves as an identifier of the electronic bill, so as to identify the electronic bill uniquely.

The electronic bill that is uniquely identified by the random number or the globally unique identifier is not capable to meet a specific bill issuing rule. For example, a batch of issuance, a place of issuance, a year of issuance, or the like of the electronic bill cannot be indicated.

Therefore, the electronic-bill identifier allocated based on the distributed system is still deficient due to poor universality.

In view of the above, the present disclosure provides a method for allocating an electronic-bill identifier, which can effectively improve universality of an electronic-bill identifier allocated based on a distributed system. Correspondingly, an apparatus for allocating an electronic-bill identifier is deployed in a computer device of Von Neumann architecture. For example, the computer is a server for implementing the method for allocating the electronic-bill identifier.

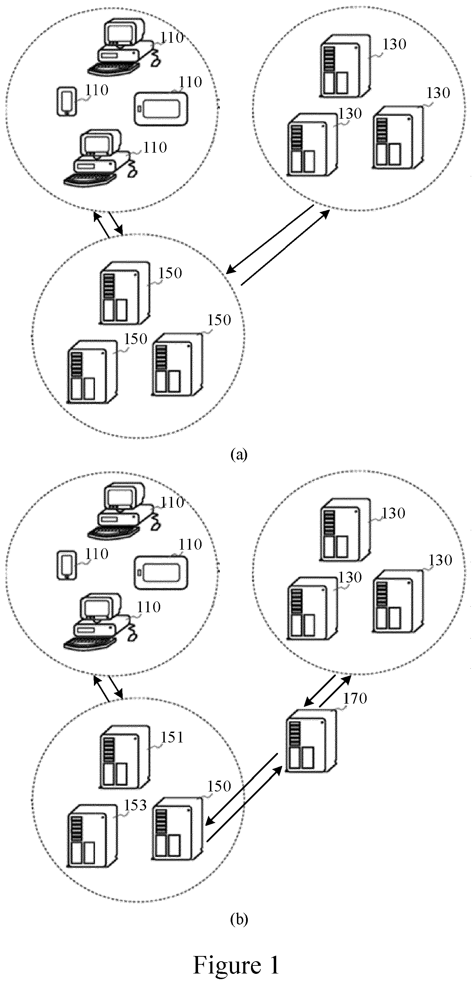

Figure 1 shows schematic diagrams of implementation environments of a method for allocating an electronic-bill identifier.

As shown in Figure 1(a), the implementation environment includes request initiators 110, and further includes processing nodes 130 and service nodes 150 that are in a distributed system.

The request initiator 110 is configured to initiate a request for issuing an electronic bill toward the service node 150. The request initiator 110 is a user terminal on which a client may be run. For example, the user terminal includes a desktop computer, a notebook computer, a tablet computer, a smartphone, a palmtop computer, or a personal digital assistant. That is, a user initiates the request for issuing the electronic bill toward the service node 150 via running the client on the request initiator 110. Thereby, the service node 150 generates the electronic bill in response to the request for issuing the electronic bill, and returns the electronic bill to the request initiator 110. In an exemplary application scenario, the request initiator 110 may be a smartphone carried by a buyer of Taobao^{™} marketplace, and the service node 150 may be a desktop computer provided for a seller of Taobao^{™} marketplace.

The processing node 130 is a computer device providing a backend service. For example, the computer device is a server, and the backend service includes a service of allocating electronic-bill identifiers. Correspondingly, the distributed system may be a server cluster including multiple servers, or may be a cloud-computing center including multiple servers, which is not limited herein.

The service node 150 may also be a computer device providing a backend service. For example, the computer device is a server, and the backend service includes a service of issuing an electronic bill. In such case, multiple service nodes 150 may form another server cluster or another cloud-computing center, i.e. another distributed system, for processing massive concurrent requests for issuing electronic bills.

In this implementation environment as shown in Figure 1(a), a processing node 130 is deployed for each service node 150 in the distributed system. Thereby, the processing node 130 deployed for the service node 150 is capable to process a request for applying for an electronic-bill identifier, which is initiated by such service node 150 toward the distributed system, and allocate the electronic-bill identifier to such service node 150.

A network connection is established in advance between the service node 150 and the processing node 130 in a wireless or wired manner, and data is transmitted between the service node 150 and the processing node 130 via the network connection. For example, the transmitted data may be the request for applying for the electronic-bill identifier initiated by the service node 150 toward the distributed system, or may be the electronic-bill identifier allocated by the processing node 130 to the service node 150.

Through interaction between the service node 150 and the processing node 130 enables, the service node 150 initiates the request for applying for the electronic-bill identifier toward the processing node 130, and requests the processing node 130 to provide the service of allocating electronic-bill identifiers.

The processing node 130 allocates the electronic-bill identifier to the service node 150, in response to the request for applying for the electronic-bill identifier that is initiated by the service node 150.

In another implementation environment as shown in Figure 1(b), multiple processing nodes are deployed for each of service nodes 150, 151, and 153 in a distributed system. For example, multiple processing nodes 130 are deployed for the service node 150 (processing nodes deployed for the service nodes 151 and 153 are not shown in Figure 1(b)). Thereby, all of the multiple processing nodes 130 deployed for the service node 150 are capable to process a request for applying for an electronic-bill identifier, which is initiated by the service node 150 toward the distributed system.

In such case, the implementation environment further includes a proxy node 170. The proxy node 170 is configured to select one of multiple processing nodes 130a, for processing the request for applying for the electronic-bill identifier that is initiated by the service node 150.

Herein, network connections are established in advance between the proxy node 170 and the service node 150, and between the proxy node and the processing nodes 130, respectively, in a wireless or wired manner. Data is transmitted between the proxy node 170 and the service node 150, as well as between the proxy node 170 and the processing nodes 130, via the network connections. For example, the transmitted data includes the request for applying for the electronic-bill identifier, which is initiated by the service node 150 toward the distributed system, and includes operation data reported by the processing nodes 130 to the proxy node 170.

The proxy node 170 receives the request for applying for the electronic-bill identifier that is initiated by the service node 150. In such case, through interacting with the processing nodes 130, the proxy node 170 may select a processing node 130 according to the operation data reported from the processing nodes 130, process a request for applying for an electronic-bill identifier that is initiated by the service node 150, and allocate the electronic-bill identifier to the service node 150 accordingly.

The service node 150, the proxy node 170, and the processing nodes 130 may be deployed in a same distributed system based on operation requirements. Thereby, complete services regarding electronic bills may be implemented by such same distributed system. The complete services include, but are not limited to, a service of allocating electronic-bill identifiers and a service of issuing electronic bills.

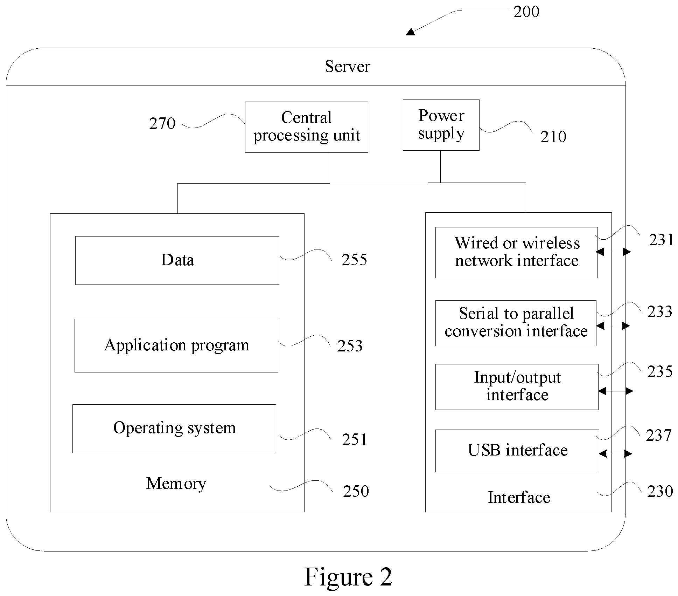

Figure 2 is a block diagram of a hardware structure of a server according to an embodiment of the present disclosure. The server is applicable to the processing node 130 and the service node 150 in the implementation environment as shown in Figure 1(a), and is also applicable to the processing node 130, the proxy node 170, and the service node 150 in the implementation environment shown in Figure 1(b).

The server is merely an example applicable in embodiments of the present disclosure, and should not be considered as providing any limitation to application of the present disclosure. It should not be construed that the server needs to rely on or has to be equipped with one or more components of the exemplary server 200 as shown in Figure 2.

The hardware structure of the server 200 may vary greatly in case of different configurations or performances. As shown in Figure 2, the server 200 includes a power supply 210, an interface 230, at least one memory 250, and at least one central processing unit (CPU) 270.

Specifically, the power supply 210 is configured to provide an operation voltage for each hardware component in the server 200.

The interface 230 includes at least one wired or wireless network interface, which is configure to interact with an external device. The interaction is, for example, between the request initiator 110 and the service node 150, between the service node 150 and the processing node 130, or between the processing node 130 and the proxy node 170, in the implementation environment as shown in Figure 1.

In other examples applicable in embodiments of the present disclosure, the interface 230 may further include at least one serial-to-parallel conversion interface 233, at least one input/output interface 235, and at least one USB interface 237, as shown in Figure 2. The present disclosure is not limited thereto.

The memory 250, i.e. a storage medium, serves as a carrier storing resources. The memory 250 may be a read-only memory, a random access memory, a magnetic disk, an optical disc, or the like. The resources stored in the memory 250 include an operating system 251, an application program 253, data 255, and the like. A manner of storage may be temporary storage or permanent storage.

The operating system 251 is configured to manage and control hardware components and the application program 253 in the server 200, such that the CPU 270 implements operations and processing on the massive data 255 in the memory 250. The operating system may be Windows ServerTM, Mac OS XTM, UnixTM, LinuxTM, FreeBSDTM, or the like.

The application program 253 completes at least one specific task according to the operating system 251, and may include at least one module (not shown in Figure 2). Each module may include a series of computer-readable instructions for the server 200. For example, both an apparatus for allocating an electronic-bill identifier and an apparatus for generating an electronic bill may be considered as application programs 253 deployed at a processing node.

The data 255 may be photos, pictures, or the like, which is stored in the magnetic disk. Alternatively, the data 255 may be electronic-bill identifiers, bill issuing information, or the like, which is stored in the memory 250.

The CPU 270 may include one or more processors, and is configured to communicate with the memory 250 via at least one communication bus. Thereby, the CPU 270 reads the computer-readable instructions stored in the memory 250, and implements the operations and processing on the massive data 255 in the memory 250. For example, the CPU 270 may read a series of computer-readable instructions stored in the memory 250, to implement a method for allocating an electronic-bill identifier or a method for generating an electronic bill.

In addition, embodiments of the present disclosure may alternatively be implemented through a hardware circuit, or a hardware circuit in combination with software. Implementation of the present disclosure is not limited to any specific hardware circuit, any specific software, or a combination of the both.

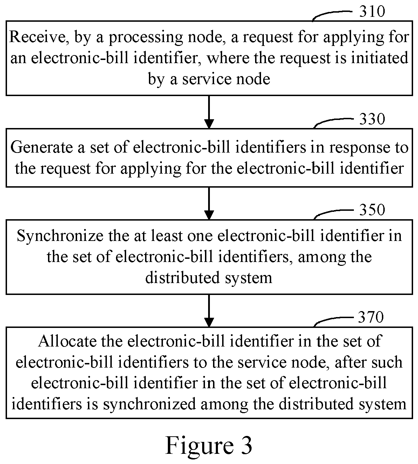

Reference is made to Figure 3. In one embodiment, a method for allocating an electronic-bill identifier is applicable to a distributed system in the implementation environment as shown in Figure 1. The distributed system includes a processing node, and a structure of the processing node may be as shown in Figure 2.

The method for allocating the electronic-bill identifier may be performed by a processing node in the distributed system. The method may include the following steps 310 to 370.

In step 310, the processing node receives a request for applying for an electronic-bill identifier, where the request is initiated by a service node.

The request for applying for the electronic-bill identifier is initiated toward the distributed system by a merchant, who applies for an electronic-bill identifier via the service node.

The service node provides for the merchant an entry for initiating application requests. The merchant may trigger a relevant operation on the entry, when wishing a processing node in the distributed system executing a service of allocating electronic-bill identifiers. Accordingly, the service node detects the operation, and initiates the request for applying for the electronic-bill identifier toward the distributed system.

For example, the entry is a virtual button provided by the service node. In a case that the merchant clicks or taps the virtual button, the service node initiates the request for applying for the electronic-bill identifier toward the distributed system. The click or tap operation is considered as the relevant operation, which is triggered on the entry by the merchant.

Thereby, a processing node in the distributed system may receive the request for applying for the electronic-bill identifier, which is initiated by the merchant via the service node. The processing node is aware of the merchant applying for the electronic-bill identifier, and then executes the service of allocating electronic-bill identifiers for the merchant accordingly.

In step 330, a set of electronic-bill identifiers is generated in response to the request for applying for the electronic-bill identifier.

First, an electronic-bill identifier of an electronic bill includes a bill code. The bill code is configured to meet a specific bill issuing rule. That is, the bill code is configured to represent issuing information required for the electronic bill. The issuing information includes, but is not limited to, a place of issuance, a year of issuance, a batch of issuance, a form of issuance, a category of an applicable industry, a category of the electronic bill, and a limit on an amount of money, or the like. Different electronic bills of a same batch share a same bill code.

Further, the electronic-bill identifier of the electronic bill includes a bill number. The bill number is configured as a unique identifier for identifying the electronic bills in the same batch. That is, different electronic bills of the same batch are provided with different bill numbers.

Accordingly, the electronic-bill identifier includes the bill code and the bill number, and thereby may serve as a unique code of the electronic bill while meeting a specific bill issuing rule. The electronic bill is uniquely identified by the electronic-bill identifier.

In one embodiment, the processing node may generate the set of electronic-bill identifiers based on an issuing quantity of electronic bills, in response to the request for applying for the electronic-bill identifier.

Generally, multiple bills may be issued all at once when issuing conventional paper bills, given efficiency of issuance. Correspondingly, an issuing quantity is set for the electronic bills. Electronic-bill identifiers allocated to a service node may be within a range. That is, the set of electronic-bill identifiers generated based on the issuing quantity of electronic bills includes at least one electronic-bill identifier.

For example, the processing node allocates a batch of electronic-bill identifiers to the service node. In such batch, all bill codes are 144031809110, and bill numbers range from 00000001 to 00000010.

For these electronic bills, "14403" represents that a place of issuance is Beijing, "18" represents that an year of issuance is "2018", "0" represents that a category of applicable industry is a common category, "9" represents that a category of an electronic bill is a regular invoice, "1" represents that a batch of issuance is the first batch in 2018, "1" represents that a form of issuance is an accounting form, and "0" represents that an amount of money is unlimited.

The bill numbers 00000001 to 00000010 represent that the processing node allocates 10 electronic-bill identifiers to the service node once in such batch.

A quantity of electronic-bill identifiers in the set of electronic-bill identifiers, which is allocated by the processing node to the service node, may be flexibly adjusted for a batch, based on an actual requirement of an application scenario.

A scenario with high concurrency is taken as an example. The processing node allocates a thousand electronic-bill identifiers to the service node once in a batch. In such case, a frequency of the service node applying for electronic-bill identifiers may be reduced, which helps reduce concurrent requests for applying for electronic-bill identifiers and improve efficiency of allocating electronic-bill identifiers. Further, the quantity of electronic-bill identifiers allocated by the processing node to the service node may be adjusted, which helps improve a service performance of the processing node and fully ensure a service performance of the distributed system.

Another application scenario is further taken as an example. A quantity of electronic-bill identifiers which the processing node allocates to the service node in a batch may be determined based on a quantity of electronic-bill identifiers for which service node applies according to an actual requirement. For example, the quantity of electronic-bill identifiers for which the service node applies is 200, and hence the quantity of electronic-bill identifiers which the processing node allocated to the service node once is 200.

In view of the above, the issuing quantity of the electronic bill may be set according to an actual processing capability of the processing node, or may depend on a quantity actually required by the service node.

In step 350, the at least one electronic-bill identifier in the set of electronic-bill identifiers is synchronized among the distributed system.

As described above, the set of electronic-bill identifiers includes at least one electronic-bill identifier, and the electronic-bill identifier includes the bill code and the bill number.

In the distributed system, each processing node may allocate an electronic-bill identifier. The electronic-bill identifiers are neither non-repeating random numbers that are generated, nor universal and unique identifiers that are created and do not conflict with each other. Hence, the electronic-bill identifiers in the set of electronic-bill identifiers allocated by each processing node cannot ensure themselves to be globally unique in the distributed system.

Hence, in this embodiment, the electronic-bill identifier in the set of electronic-bill identifiers needs to be synchronized among all processing nodes in the distributed system, so as to ensure data consistency among the processing nodes in the distributed system.

A synchronization process for ensuring the data consistency among the processing nodes in the distributed system is implemented through a consensus algorithm. For example, the consensus algorithm includes, but is not limited to, a raft algorithm, a paxos algorithm, or a distributed hash algorithm.

After an electronic-bill identifier in the set of electronic-bill identifiers is synchronized among the distributed system, all processing nodes in the distributed system record the synchronized electronic-bill identifier. Thereby, a set of electronic-bill identifiers which is subsequently generated would exclude the synchronized electronic-bill identifier that has been recorded. It is prevented that identical electronic-bill identifiers exist in the distributed system. Data consistency is achieved among the processing nodes.

In step 370, the electronic-bill identifier in the set of electronic-bill identifiers is allocated to the service node, after such electronic-bill identifier in the set of electronic-bill identifiers is synchronized among the distributed system.

The electronic-bill identifier in the set of electronic-bill identifiers is synchronized among the distributed system when being recorded by all processing nodes in the distributed system. In such case, the processing node allocates the synchronized electronic-bill identifier to the service node, only when global uniqueness of the synchronized electronic-bill identifier is verified.

Thereby, the service node may select one electronic-bill identifier from the obtained set of electronic-bill identifiers, to identify an electronic bill uniquely when issuing the electronic bill.

The above process achieves allocating the electronic-bill identifier based on the distributed system. The electronic-bill identifier includes the bill code and the bill number. Thereby, the electronic bill meeting a specific bill issuing rule may be issued in a convenient environment provided by the distributed system, which improves universality of the electronic-bill identifier effectively. Further, data consistency among the processing nodes in the distributed system is ensured, which helps exploit advantages of the distributed system fully in response to massive concurrent requests for applying for electronic-bill identifiers.

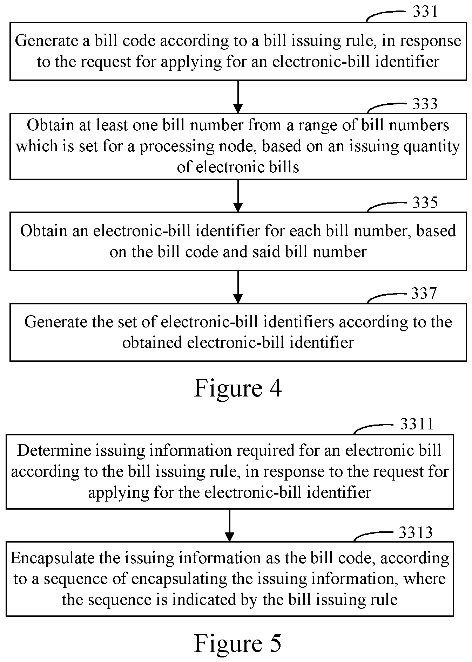

Reference is made to Figure 4. In one embodiment, the step 330 may include following steps 331 to 337.

In step 331, the bill code is generated according to a bill issuing rule, in response to the request for applying for the electronic-bill identifier.

The bill issuing rule embodies issuing information of an electronic bill. The issuing information is, for example, a place of issuance, a year of issuance, a batch of issuance, a form of issuance, a category of applicable industry, a category of the electronic bill, or a limit on an amount of money.

The bill code aims to enable the electronic-bill identifier, which is allocated based on the distributed system, to meet a specific bill issuing rule. That is, the bill code is configured to representing the issuing information of the electronic bill.

Thus, the bill code may be generated according to the bill issuing rule.

For example, a bill issuing rule M embodies a place of issuance, a year of issuance, and a batch of issuance, of electronic bills. In such case, the bill code generated according to the bill issuing rule M may represent the place of issuance, the year of issuance, and the batch of issuance, of the electronic bill.

For example, the bill code of the electronic bill is 14403181. "14403" represents that the place of issuance of the electronic bill is Beijing, "18" represents that the year of issuance of the electronic bill is 2018, and "1" represents that the batch of issuance of the electronic bill is the first batch in 2018.

In step 333, at least one bill number is obtained from a range of bill numbers which is set for the processing node, based on an issuing quantity of electronic bills.

As described above, the bill number serves as a unique identifier for discriminate electronic bills in a same batch.

The issuing quantity of electronic bills in a same batch represents a range, and correspondingly, the bill numbers are located within the range. For example, the bill numbers range from 00000001 to 99999999. It is indicated that the issuing quantity of electronic bills in such batch is 99999999, and different electronic bills are uniquely identified by different bill numbers.

The issuing quantity of electronic bills may be flexibly adjusted for a batch, according to an actual requirement of an application scenario, which is not specifically limited herein.

In the distributed system, all processing nodes may allocate electronic-bill identifiers. In other words, for each batch, bill numbers of electronic-bill identifiers allocated by all processing nodes are located within a same range of bill numbers. For example, the bill numbers come from a range from 00000001 to 99999999.

This embodiment ensures that an allocated electronic-bill identifier is provided with a globally unique bill number in the distributed system. For such purpose, each processing node is set with a different range of bill numbers, to prevent different processing nodes from allocating identical electronic-bill identifiers. Thereby, data consistency is achieved among the processing nodes in the distributed system.

For example, the distributed system includes a processing node A, a processing node B, and a processing node C. The range of bill numbers for the processing node A is set as 00000001 to 33333333, the range of bill numbers for the processing node B is set as 33333334 to 66666666, and the range of bill numbers for the processing node C is set as 66666667 to 99999999.

On such basis, a corresponding bill number can be obtained according to the issuing quantity of electronic bills, only after the range of bill numbers that is set for the processing node is determined.

Further in the forgoing example, it is assumed that the issuing quantity of electronic bills is 200. In such case, the processing node A may obtain bill numbers 00000001 to 00000200 from the set range of bill numbers, i.e. 00000001 to 33333333.

Similarly, the processing node B may obtain bill numbers 33333334 to 33333533 from the set range of bill numbers, i.e. 33333334 to 66666666. The processing node C may obtain bill numbers 66666667 to 66666866 from the set range of bill numbers, i.e. 66666667 to 99999999.

Certainly, the bill numbers may be selected sequentially or randomly from the range of bill numbers that is set for the processing node, which is not specifically limited herein.

In step 335, an electronic-bill identifier for each bill number is obtained based on the bill code and said bill number.

As described above, different electronic bills in the same batch is provided with the same bill code and different bill numbers.

Therefore, electronic-bill identifiers for a same batch include identical bill codes and different bill numbers. Hence, the electronic bill identifiers can serve as unique codes of the electronic bills issued in this batch, and identify electronic bills issued in this batch uniquely, while meeting a specific bill issuing rule.

For example, all bill codes in a batch are 144031809110, and the bill numbers in the batch range from 00000001 to 00000200. In such case, the obtained electronic-bill identifiers range from 14403180911000000001 to 1440318091100000200. That is, the obtained electronic-bill identifiers identify the 200 electronic bills issued in this batch uniquely.

In step 337, the set of electronic-bill identifiers is generated according to the obtained electronic-bill identifier.

In the foregoing example, the obtained electronic-bill identifiers range from 14403180911000000001 to 1440318091100000200, which serve as the set of electronic-bill identifiers required by the 200 electronic bills issued in this batch.

A combination of the forgoing embodiments implements a unique code of the electronic bill based on a combination of the bill code and the bill number. Met is a specific bill issuing rule, that is, a requirement of the electronic-bill identifier on a specific mode of "code + number". It is facilitated to improve universality of the electronic-bill identifiers allocated based on the distributed system.

Reference is made to Figure 5. In one embodiment, the step 331 may include following steps 3311 and 3313.

In step 3311, issuing information required for an electronic bill is determined according to the bill issuing rule, in response to the request for applying for the electronic-bill identifier.

For an electronic bill, the bill issuing rule may embody a place of issuance, a year of issuance, a batch of issuance, a form of issuance, a category of applicable industry, a category of the electronic bill, and a limit on an amount of money. In such case, the issuing information required for the electronic bill may be determined based on the bill issuing rule, and includes: the place of issuance, the year of issuance, the batch of issuance, the form of issuance, the category of applicable industry, the category of the electronic bill, and the limit on the amount of money, of the electronic bill.

In step 3313, the issuing information is encapsulated as the bill code, according to a sequence of encapsulating the issuing information, where the sequence is indicated by the bill issuing rule.

The bill code includes a string of ordered characters (for example, digits). Thereby, the issuing information required for the electronic bill is represented by the ordered characters.

Hence, the bill issuing rule indicates not only the issuing information of the electronic bill required to be represented, but also the sequence of encapsulating the issuing information. Thereby, the processing node can generate the bill code of the electronic bill accordingly.

For example, it is assumed that the bill issuing rule indicates that the first five digits represent the place of issuance of the electronic bill, the sixth and seventh digits represent the year of issuance of the electronic bill, and the eighth digit represents the batch of issuance of the electronic bill.

In such case, the processing node may determine that the issuing information required for the electronic bill includes: the place of issuance, the year of issuance, and the batch of issuance of the electronic bill.

The processing node determines that the place of issuance of the electronic bill is Beijing, the year of issuance of the electronic bill is 2018, and the batch of issuance of the electronic bill is the first batch in 2018. Afterwards, the processing node may obtain the bill code "14403181" based on the sequence of encapsulating the issuing information, which is indicated by the bill issuing rule.

The first five digits "14403" represent that the place of issuance of the electronic bill is Beijing, the sixth and seventh digits "18" represent that the year of issuance of the electronic bill is 2018, and the eighth digit "1" represents that the batch of issuance of the electronic bill is the first batch in 2018.

This embodiment implements a solution for generating the bill code based on the bill issuing rule. The electronic-bill identifier meeting a specific bill issuing rule is achieved, which facilitates ensuring universality of the electronic-bill identifiers allocated based on the distributed system.

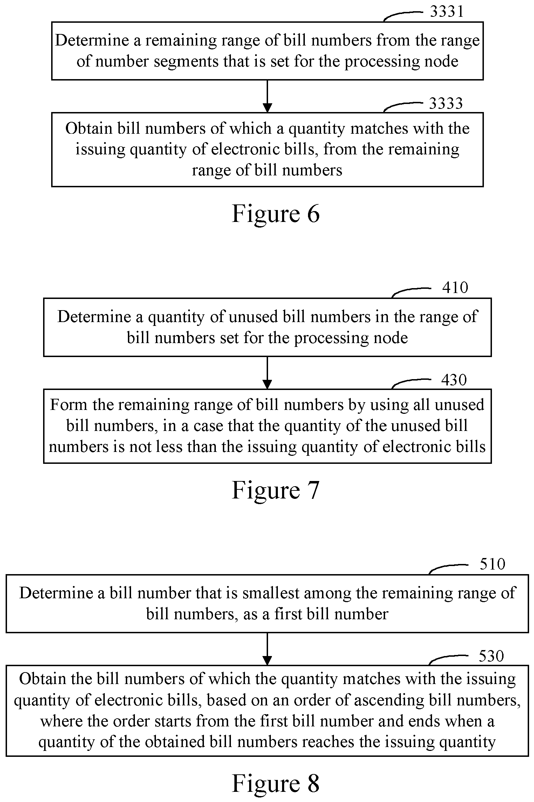

Reference is made to Figure 6. In one embodiment, the step 333 may include following steps 3331 and 3333.

In step 3331, a remaining range of bill numbers is determined from the range of number segments that is set for the processing node.

Each time the service node initiates a request for applying for an electronic-bill identifier, the processing node distributes electronic-bill identifiers of a certain quantity, and correspondingly the service node may obtain the electronic-bill identifiers of such quantity. The bill codes identical in a same batch. Only the bill numbers would change as the service node applies for electronic bills. That is, in the range of bill numbers set for the processing node, a quantity of used bill numbers is gradually increased, and a quantity of unused bill numbers is gradually decreased.

When allocating new electronic-bill identifiers, the processing node is only capable to execute the service of allocation based on the unused bill numbers. That is, it is necessary that the processing node determines the remaining range of bill numbers in the set range of bill numbers. Substantially, the remaining range of bill numbers indicates the unused bill numbers in the range of bill numbers set for the processing node.

For example, it is assumed that the range of bill numbers set for the processing node A is 00000001 to 33333333.

A quantity of electronic bills is 200 for current issuance, and the bill numbers of the electronic bills for current issuance ranges from 00000001 to 00000200. In such case, the bill numbers 00000001 to 00000200 are considered as used bill numbers in the range of bill numbers set for the processing node A. Accordingly, the remaining range of bill numbers is from 00000201 to 33333333. That is, bill numbers 00000201 to 33333333 serves as unused bill numbers in the range of bill numbers set for the processing node A.

In step 3333, bill numbers of which a quantity matches with the issuing quantity of electronic bills are obtained from the remaining range of bill numbers.

In the foregoing example, it is assumed that the issuing quantity of electronic bills is 200, that is, a quantity of electronic bills for next issuance is 200. In such case, the remaining range of bill numbers determined to be 00000201 to 33333333, and hence the bill numbers of the electronic bills for next issuance are obtained as 00000201 to 00000400.

The bill numbers may be selected sequentially or randomly from the remaining range of bill numbers, which is not specifically limited herein.

This embodiment achieves generation of the bill number, such that a requirement of the electronic-bill identifier on a specific mode of "code + number" is met. Thereby, it is facilitated to ensure universality of the electronic-bill identifier allocated based on the distributed system.

Reference is made to Figure 7. In one embodiment, the step 3331 may include following steps 410 and 430.

In step 410, a quantity of unused bill numbers in the range of bill numbers set for the processing node is determined.

In the foregoing example, it is assumed that the range of bill numbers set for the processing node A is 00000001 to 33333333.

A quantity of electronic bills for current issuance is 200, and bill numbers of the electronic bills issued for current issuance ranges from 00000001 to 00000200. In such case, unused bill numbers in the range of bill numbers set for the processing node A is 00000201 to 33333333.

In such case, the quantity of the unused bill numbers in the range of bill numbers set for the processing node A is determined to be 33333132.

In a case that an issuing quantity of electronic bills for next issuance is also 200, the quantity of the unused bill numbers in the range of bill numbers set for the processing node A is sufficient to support the next issuance. In a case that the issuing quantity of electronic bills for next issuance is greater than 33333132, the quantity of the unused bill numbers in the range of bill numbers set for the processing node A is insufficient for the next issuance in this batch.

Hence, before the remaining range of bill numbers is determined, it is necessary to first determine whether the quantity of the unused bill numbers exceeds the issuing quantity of electronic bills.

The process goes to step 430, in a case that the quantity of the unused bill numbers is not less than the issuing quantity of electronic bills.

The process goes to step 420, in a case that the quantity of the unused bill numbers is less than the issuing quantity of electronic bills.

In step 430, all unused bill numbers form the remaining range of bill numbers, in a case that the quantity of the unused bill numbers is not less than the issuing quantity of electronic bills.

That is, in a case that the issuing quantity of electronic bills for next issuance is also 200, the remaining range of bill numbers is all unused bill numbers 00000201 to 33333333 in the range of bill numbers set for the processing node A.

Correspondingly, reference is made to Figure 8. In one embodiment, the step 3333 may include steps S510 and S530.

In step 510, a bill number that is smallest among the remaining range of bill numbers serves as a first bill number.

In step 530, the bill numbers of which the quantity matches with the issuing quantity of electronic bills are obtained based on an order of ascending bill numbers, where the order starts from the first bill number and ends when a quantity of the obtained bill numbers reaches the issuing quantity.

In this embodiment, the bill numbers are sequentially obtained from the remaining range of bill numbers.

In a specific embodiment, the remaining range of bill numbers is from 00000201 to 33333333. On such basis, in a case that the issuing quantity of electronic bills for next issuance is 200, the smallest bill number 00000201 serves as the first bill number, and the bill numbers are obtained from the first bill number in an ascending order. That is, 00000202 is the second bill number, 00000203 is the third bill number, and so forth. 00000400 is the last bill number, when the quantity of the bill numbers reaches the issuing quantity of electronic bills, that is, 200.

The foregoing process implements a solution of allocating electronic-bill identifiers in the same batch. It is ensured that the service of allocating electronic-bill identifiers is achieved based on a same batch.

Bill codes of electronic bills in a same batch are the same, and bill numbers of electronic bills in the same batch differs from each other. Therefore, an electronic bill is uniquely identified by a combination of the bill code and the bill number.

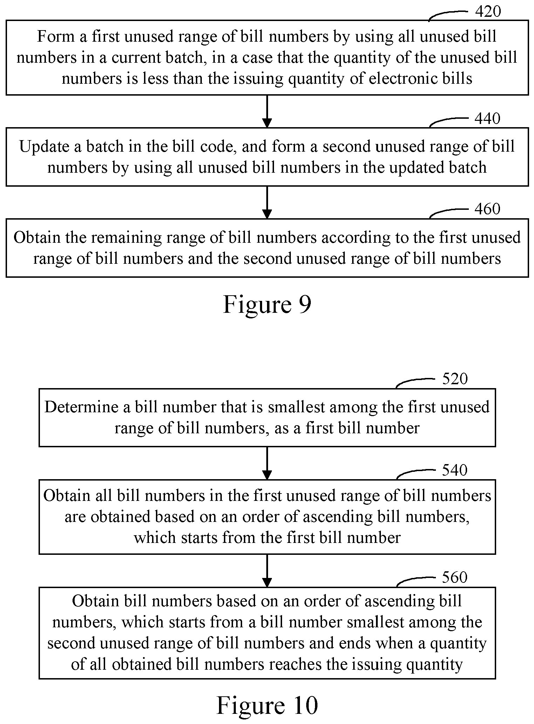

Reference is made to Figure 9. In one embodiment, the step 3331 may further include following steps 420 to 460.

In step 420, all unused bill numbers in a current batch form a first unused range of bill numbers, in a case that the quantity of the unused bill numbers is less than the issuing quantity of electronic bills.

In step 440, a batch in the bill code is updated, and all unused bill numbers in the updated batch form a second unused range of bill numbers.

In step 460, the remaining range of bill numbers is obtained according to the first unused range of bill numbers and the second unused range of bill numbers.

As described above, in a case that the issuing quantity of electronic bills for next issuance is greater than 33333132, the quantity of the unused bill numbers in the range of bill numbers set for the processing node A is insufficient for the next issuance. In such case, it is necessary to provide an additional batch, to ensure sufficient unused bill numbers for the next issuance.

It is assumed that the issuing quantity of electronic bills for next issuance is 33333135. Hence, the first unused range of bill numbers is all unused bill numbers 00000201 to 33333333 in the range of bill numbers set for the processing node A, on a basis of the first batch in 2018, that is, the current batch.

The additional batch is the second batch in 2018, that is, the updated batch. In the updated batch, all bill numbers 00000001 to 33333333 in the range of bill numbers set for the processing node A are regarded as unused bill numbers, that is, serve as the second unused range of bill numbers.

On such basis, the remaining range of bill numbers is the first unused range of bill numbers, i.e. from 00000201 to 33333333, and the second unused range of bill numbers, i.e. from 00000001 to 33333333. Thereby, sufficient unused bill numbers are ensured for the next issuance of electronic bills.

Correspondingly, reference is made to Figure 10. In one embodiment, the step 3333 may include following steps 520 to 560.

In step 520, a bill number that is smallest among the first unused range of bill numbers serves as a first bill number.

In step 540, all bill numbers in the first unused range of bill numbers are obtained based on an order of ascending bill numbers, which starts from the first bill number.

In step 560, bill numbers are obtained based on an order of ascending bill numbers, which starts from a bill number smallest among the second unused range of bill numbers and ends when a quantity of all obtained bill numbers reaches the issuing quantity.

In this embodiment, the bill numbers are obtained sequentially from the remaining range of bill numbers.

Specifically, the remaining range of bill numbers includes the first unused range of bill numbers and the second unused range of bill numbers.

The first unused range of bill numbers may be from 00000201 to 33333333. In a case that the issuing quantity of electronic bills for next issuance is 33333135, the smallest bill number 00000201 in the first unused range of bill numbers serves as the first bill number. Bill numbers are obtained based on an ascending order starting from the first bill number. That is, 00000202 is the second bill number, 00000203 is the third bill number, and so forth. The order ends at the last bill number 33333333 in the first unused range of bill numbers. At such time, a quantity of the obtained bill numbers reaches the quantity of the unused bill numbers in the first unused range of bill numbers, that is, 33333132, and has not reached the issuing quantity of electronic bills, that is, 33333135.

The second unused range of bill numbers is from 00000001 to 33333333. The smallest bill number 00000001 in the second unused range of bill numbers serves as the antepenultimate bill number, and bill numbers are further obtained based on an ascending order starting from the antepenultimate bill number. That is, 00000002 serves as the penultimate bill number, and 00000003 serves as the last bill number. At such time, the quantity of the obtained bill numbers reaches the issuing quantity of electronic bills, that is, 33333135.

In this embodiment, seamless connection between different batches renders a solution of allocating electronic-bill identifiers from different batches. Implementation of the service of allocating electronic-bill identifiers is ensured based on different batches.

For two different batches, bill codes are different for electronic bills in different batches. For two different batches, there may be identical bill numbers between the two batches, and bill numbers are different in a same batch. Therefore, an electronic bill can still be uniquely identified by a combination of the bill code and the bill number.

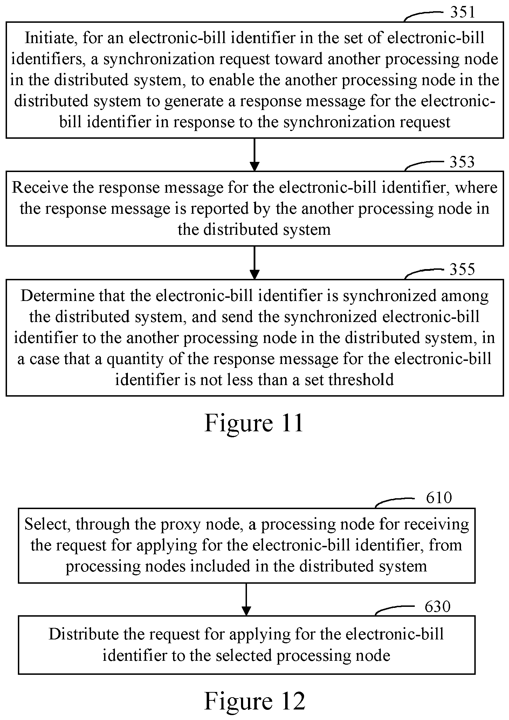

Reference is made to Figure 11. In one embodiment, the step 350 may include following steps 351 to 355.

In step 351, for an electronic-bill identifier in the set of electronic-bill identifiers, a synchronization request is initiated toward another processing node in the distributed system, to enable the another processing node in the distributed system to generate a response message for the electronic-bill identifier in response to the synchronization request.

In step 353, the response message for the electronic-bill identifier is received, where the response message is reported by the another processing node in the distributed system.

In step 355, in a case that a quantity of the response message for the electronic-bill identifier is not less than a set threshold, it is determined that the electronic-bill identifier is synchronized among the distributed system, and the synchronized electronic-bill identifier is sent to the another processing node in the distributed system.

In this embodiment, a process of synchronization is implemented based on a paxos algorithm.

For example, it is assumed that the set of electronic-bill identifiers at the processing node A in the distributed system is 14403180911000000001 to 1440318091100000010.

The processing node A initiates the synchronization request on an electronic-bill identifier 14403180911000000001 (hereinafter referred to as T for short) in the set of electronic-bill identifiers, toward another processing node in the distributed system, and requests the remaining processing nodes to respond. In a case that a remaining processing node has never responded to the synchronization request on the electronic-bill identifier T, such remaining processing node generates a response message for the electronic-bill identifier T in response to the synchronization request, and feeds the response message back to the processing node A.

In a case that a quantity of the received response messages for the electronic-bill identifier T is not less than a set threshold, the processing node A may determine that the electronic-bill identifier T is capable to be synchronized in the distributed system, and send the electronic-bill identifier T to the remaining processing nodes in the distributed system. Thereby, data consistency on the electronic-bill identifier T is achieved among the processing nodes in the distributed system.

The set threshold may be flexibly adjusted according to an actual requirement of an application scenario, which is not specifically limited herein.

A combination of the foregoing embodiments addresses an issue of maintaining transmission consistency of the electronic-bill identifier among the distributed system based on the paxos algorithm. Thereby, the electronic-bill identifiers recorded by all processing nodes are globally unique, and data consistency among the processing nodes is fully ensured in the distributed system.

In conventional technology, the processing node in the distributed system is apt to operate abnormally. In case of abnormal operation of a processing node, a corresponding service node cannot generate an electronic bill normally.

Therefore, the electronic-bill identifier allocated based on the distributed system is limited due to poor reliability.

Reference is made to Figure 12. In one embodiment, the distributed system further includes a proxy node.

In order to ensure reliability of the distributed system, multiple processing nodes may be deployed in the distributed system for a same request for applying for an electronic-bill identifier. Thereby, processing of the request for applying for the electronic-bill identifier is facilitated.

Hence, the proxy node is configured to select one processing node from multiple processing nodes, for processing the request for applying for the electronic-bill identifier.

The processing node may be randomly selected from the multiple deployed processing nodes. Alternatively, the processing node may be selected from the multiple deployed processing nodes according to operation states of the processing nodes. Alternatively, the processing node may be selected based on a physical distance to the service node.

In the specific embodiment, the method may further include following steps 610 and 630 before the step 310.

In step 610, a processing node for receiving the request for applying for the electronic-bill identifier is selected through the proxy node, from processing nodes included in the distributed system.

In step 630, the request for applying for the electronic-bill identifier is distributed to the selected processing node.

In this foregoing embodiment, multiple processing nodes are deployed in the distributed system for the same request for applying for the electronic-bill identifier. Thereby, even if one of the processing nodes operates abnormally, the request for applying for the electronic-bill identifier can still be processed by a processing node that operates normally. Reliability of the distributed system is fully ensured.

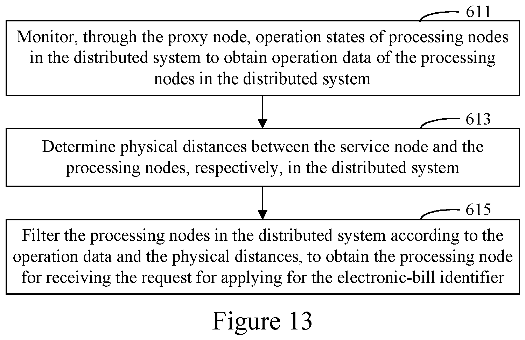

Reference is made to Figure 13. In one embodiment, the step 610 may include following steps 611 to 615.

In step 611, operation states of the processing nodes in the distributed system are monitored through the proxy node, to obtain operation data of the processing nodes in the distributed system.

The operation data of the processing node includes a quantity of loads, a utility rate of a memory, a utility rate of a CPU, a network rate, a packet loss rate, or the like. The operation data is obtained by the proxy node monitoring the operation state of the processing node in the distributed system.

In step 613, physical distances between the service node and the processing nodes, respectively, in the distributed system are determined.

In step 615, the processing nodes in the distributed system are filtered according to the operation data and the physical distances, to obtain the processing node for receiving the request for applying for the electronic-bill identifier.

In a specific embodiment, based on the distributed system, a first score *a* of a processing node is determined according to the operation data of the processing node, and a second score *b* of the processing node is determined according to the physical distance between the processing node and the service node.

Then, a score (equal to *a*m + b*n*) of the processing node is obtained based on weights *m* and *n,* which corresponds to the operation data and the physical distance, respectively.

Afterwards, a processing node with the highest score may serves as the processing node for receiving the request for applying for the electronic-bill identifier, based on the scores of all processing nodes in the distributed system.

The foregoing process achieves selection of the processing nodes based on the operation data and the physical distance. Advantages of the selected processing node are ensured to the most extent. For example, the selected processing node is closest to the service node, has a best operation state. Hence, an abnormal interruption is the least probable when the selected processing node executes the service of allocating electronic-bill identifiers. It is facilitated to improve reliability of the distributed system and efficiency of allocating electronic-bill identifiers.

In one embodiment, the method may further include a following step.

The processing nodes in the distributed system are updated, through the proxy node monitoring the operation states of the processing nodes in the distributed system.

Each processing node may be subject to arbitrary abnormal operation when performing the service of allocating electronic-bill identifiers. For example, the processing node crashes or breaks down. In a case that the abnormal processing node is not fixed in time, the service of allocating electronic-bill identifiers may be subject to an abnormal interruption, affecting the efficiency of allocating electronic-bill identifiers.

Hence, availability of each processing nodes need to be ensured based on the distributed system.

As described above, operation data of the processing node includes a quantity of loads, a utility rate of a memory, a utility rate of a CPU, a network rate, a packet loss rate, or the like. The operation data may be obtained through the proxy node monitoring the operation state of the processing node in the distributed system. Therefore, it can be learned in real time whether the processing node in the distributed system operates abnormally. For example, it may be detected that the packet loss rate of the processing node keeps high, or the network rate of the processing node is excessively low. In such case, it is indicated that the processing node may operate abnormally.

A corresponding update operation needs to be performed, in a case that the operation state of the processing node changes. The update operation includes eliminating a processing node, recovering a processing node recovering, or the like.

For example, when an abnormal processing node is detected, the abnormal processing node is eliminated from the distributed system. Alternatively, when an abnormal processing node is detected to recover to a normal state, the normal processing node is re-deployed in the distributed system.

The foregoing process improves reliability of the distributed system effectively. Abnormal interruption of the service of allocating electronic-bill identifiers is prevented.

In one embodiment, the method may further include a following step.

A primary processing node is switched to a secondary processing node, through the proxy node monitoring the operation states of the processing nodes in the distributed system.

Abnormality of the processing node includes, but is not limited to, an excessively large quantity of loads, an excessively high utility rate of a memory, an excessively high utility rate of a CPU, an excessively low network rate, an excessively high packet loss rate, a halt of the processing node, a breakdown of the processing node, or the like.

Accordingly, the primary processing node and the secondary processing node are deployed in the distributed system for each processing node.

When the processing node performs the service of allocating electronic-bill identifiers, the proxy node may detect that the primary processing node operates abnormally according to the operation data of the primary processing node. In such case, the proxy node activates and controls the secondary processing node to perform the service of allocating electronic-bill identifiers, as replacement of the primary processing node.

The foregoing process implements a disaster-tolerating solution based on the distributed system. That is, the secondary processing node does not operate when the primary processing node operates normally, and only provides the service of allocating electronic-bill identifiers when the primary processing node operates abnormally. Reliability of the distributed system is further ensured, and abnormal interruption of the service of allocating electronic-bill identifiers is avoided. Thereby, efficiency of allocating the electronic-bill identifiers is fully ensured.

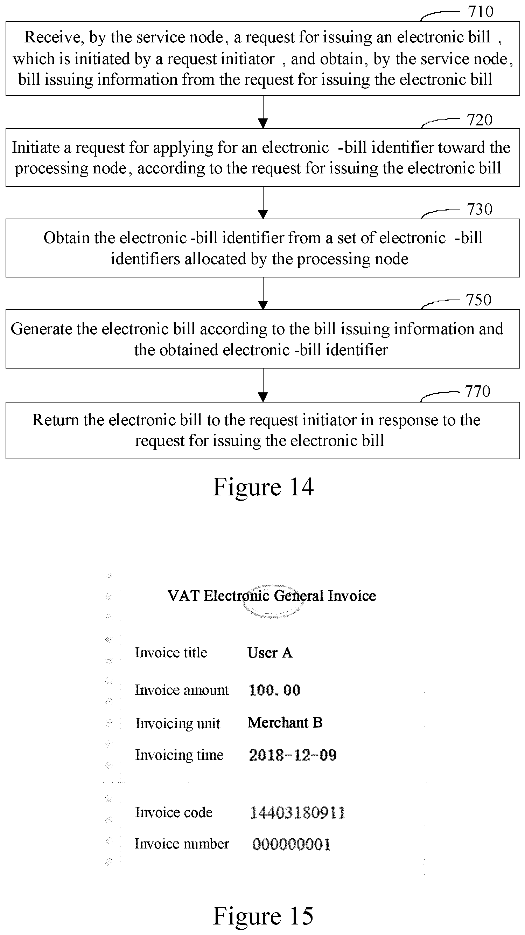

Reference is made to Figure 14. In one embodiment, a method for generating an electronic bill is provided. The method is applicable to a service node in the implementation as shown in Figure 1. The service node interacts with a distributed system including a processing node, and a structure of the service node may be as shown in Figure 2.

The method for generating the electronic bill may be performed by the service node, and may include following steps 710 to 770.

In step 710, the service node receives a request for issuing an electronic bill, which is initiated by a request initiator, and obtains bill issuing information from the request for issuing the electronic bill.

The request for issuing the electronic bill is initiated toward the service node via a client run on the request initiator, by a user who requests issuance of the electronic bill.

The client run on the request initiator provides an entry for initiating the issuance request for the user. The user may trigger a relevant operation on the entry for initiating the issuance request, when wising the service node to perform a service of issuing electronic bills. Accordingly, the client detects the operation, and initiates the request for issuing the electronic bill toward the service node.

For example, the entry is a virtual button provided by the client. In a case that the user clicks or taps the virtual button, the client initiates the request for issuing the electronic bill to the service node. The click or tap operation is considered as the relevant operation, which is triggered on the entry by the user.

Thereby, the service node may receive the request for issuing the electronic bill, which is initiated by the user. Accordingly, the service node is aware of that the user requests issuance of the electronic bill, and then executes the service of issuing electronic bills for the user.

The request for issuing the electronic bill carries the bill issuing information, and the bill issuing information includes an identifier of a recipient and an amount of transferred resources.

It is taken as an example for illustration that the electronic bill is an electronic invoice. It is assumed that user A purchases commodities with a value of 100 yuan from merchant B. In a case that user A requires merchant B to issue an electronic invoice, user A initiates a request for issuing an electronic bill toward merchant B.

In such case, the request for issuing the electronic bill carries the bill issuing information, and the bill issuing information includes the identifier "A" of the recipient and the amount "100 yuan" of transferred resources.

In step 720, a request for applying for an electronic-bill identifier is initiated toward the processing node, according to the request for issuing the electronic bill.

In step 730, the electronic-bill identifier is obtained from a set of electronic-bill identifiers allocated by the processing node.

The set of electronic-bill identifiers is generated by the processing node according to an issuing quantity of electronic bills, and is synchronized among the distributed system. The electronic-bill identifier includes a bill code and a bill number. For example, it is assumed that the set of electronic-bill identifiers allocated by the processing node is 1440318091100000001 to 1440318091100000200. In such case, the electronic-bill identifier, such as 1440318091100000001, may be obtained from the set of electronic-bill identifiers, for generating the electronic bill in a subsequent step.

In step 750, the electronic bill is generated according to the bill issuing information and the obtained electronic-bill identifier.

The electronic bill may be generated after the bill issuing information and the electronic-bill identifier are obtained.

It is taken as an example for illustration that the electronic bill is an electronic invoice. As shown in Figure 15, a title (the identifier of the recipient), an amount of money (the amount of transferred resources), a drawer (an identifier of a service node), an issuance time ("2018-12-19"), a code ("14403180911"), and a number "000000001", of the invoice are included in the electronic invoice.

In step 770, the electronic bill is returned to the request initiator in response to the request for issuing the electronic bill.

In the foregoing process, complete services regarding electronic bills are implemented through interactions between the service node and the request initiator, and between the service code and the processing node in the distributed system. That is, the service of allocating electronic-bill identifiers and the service of issuing electronic bills are completed. Efficiency of issuing bills is greatly improved.

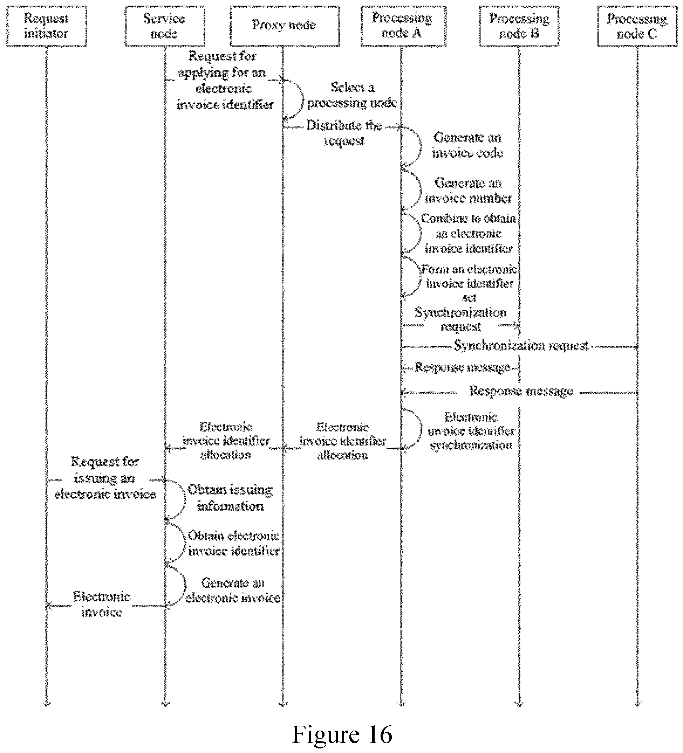

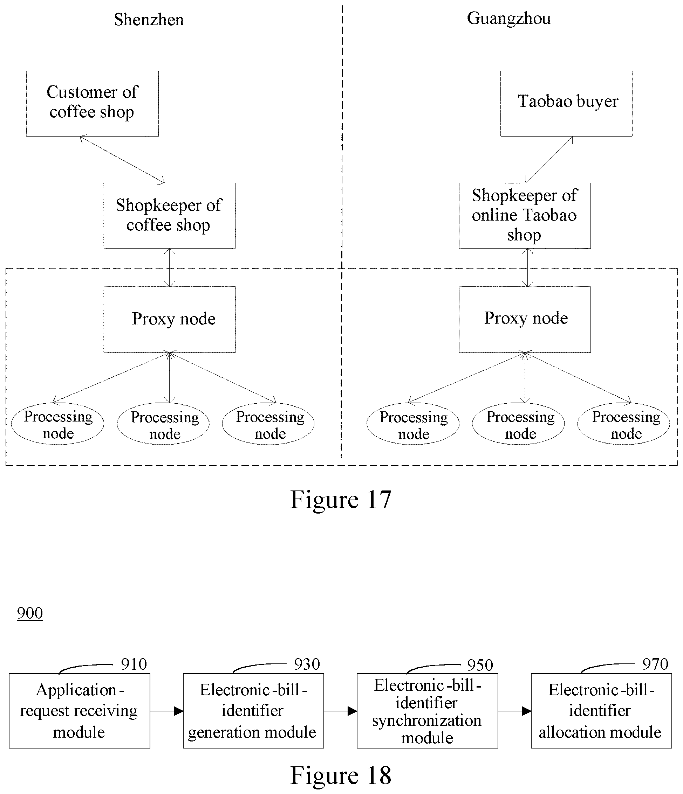

Figures 16 and 17 are schematic diagrams of reimbursement of an electronic invoice in an application scenario according to an embodiment.

The application scenario includes a request initiator, a service node, and a distributed system. For example, the distributed system may be based on a blockchain network. Thereby, advantages of blockchain technology can be utilized, achieving an electronic-invoice issuance system which is decentralized and tamper-resistant.

The distributed system further includes a proxy node and processing nodes. Interaction among the components is as shown in Figure 16.

Merchants are increasingly widely distributed at various locations. For example, a merchant may be a shopkeeper of a coffee shop located in Shenzhen, or may be a shopkeeper of an online shop of Taobao^{™} marketplace, who is located in Guangzhou. Accordingly, the proxy node and the processing node in the distributed system are correspondingly deployed at different positions.

On operation requirement, the proxy nodes may be deployed with the merchants, that is, deployed in Guangzhou and Shenzhen, respectively. Alternatively, the proxy nodes may be deployed at one place, for example, all proxy nodes are deployed in Shenzhen. The present disclosure is not limited to this application scenario.

A reimbursement process of an electronic invoice includes: an identifier allocation phase, an issuance phase, and a reimbursement phase. In the identifier allocation phase, the shopkeeper of the coffee shop in Shenzhen may initiate a request for applying for an electronic-invoice identifier toward the distributed system via a desktop computer. A proxy node deployed in Shenzhen selects a processing node from multiple of processing nodes deployed in Shenzhen, for processing the request initiated by the shopkeeper. Accordingly, an electronic-invoice identifier which is globally unique in the entire distributed system is generated, and then returned to the shopkeeper.

Similarly, the shopkeeper of the online shop of Taobao^{™} marketplace in Guangzhou may initiate a request for applying for an electronic-invoice identifier toward the distributed system via a smartphone. A proxy node deployed in Guangzhou selects a processing node from multiple of processing nodes deployed in Guangzhou, for processing the request initiated by the shopkeeper. Accordingly, an electronic-invoice identifier which is globally unique in the entire distributed system is generated, and then returned to the shopkeeper.

The reimbursement process then proceeds from the identifier allocation phase to the issuance phase. In this case, a customer of the coffee shop initiates a request for issuing an electronic invoice toward a service node at which the shopkeeper of the coffee shop is located. The service node generates an electronic invoice, according to invoice issuing information in such request and the electronic-invoice identifier allocated by the processing node. Then, the service node returns the electronic invoice to the customer of the coffee shop.

A buyer of Taobao^{™} marketplace may initiate a request for issuing an electronic invoice toward a service node at which the shopkeeper of the online Taobao^{™} shop is located. The service node generates an electronic invoice, according to invoice issuing information in such request and the electronic-invoice identifier allocated by the processing node. Then, the service node returns the electronic invoice to the buyer of Taobao^{™} marketplace.

The electronic invoice reimbursement process may be triggered to proceed from the issuance phase to the reimbursement phase, based on the electronic invoice received by the customer of the coffee shop or the buyer of Taobao^{™} marketplace. Reimbursement is performed on the electronic invoice according to the electronic-invoice identifier that is globally unique in the distributed system. In such case, it is prevented that the reimbursement fails due to the identifier of the electronic invoice conflicts with that of an electronic invoice issued by another merchant.

In this application scenario, the distributed system is applied. Information transmitted between the service node and the processing node is always consistent, data consistency is achieved among the processing nodes, and the identifier of the electronic invoice conforms to a specific bill issuing rule "code + number". Thereby, a service of electronic-invoice reimbursement is capable to be performed in a convenient environment provided by the distributed system. Efficiency and experience of users are improved in reimbursement of electronic invoices.

Hereinafter provided are apparatus embodiments of the present disclosure. Apparatuses may be configured to perform the method for allocating the electronic-bill identifier and the method for generating the electronic bill disclosed herein. Details not disclosed in the apparatus embodiments of the present disclosure may refer to the method for allocating the electronic-bill identifier and the method for generating the electronic bill according to the method embodiments of the present disclosure.

Reference is made to Figure 18. In one embodiment, an apparatus 900 for allocating an electronic-bill identifier is provided. The apparatus 900 is applied to a distributed system. The distributed system includes a processing node. The apparatus 900 is deployed at the processing node in the distributed system.

The apparatus 900 includes, but is not limited to, an application-request receiving module 910, an electronic-bill-identifier generation module 930, an electronic-bill-identifier synchronization module 950, and an electronic-bill-identifier allocation module 970.

The application-request receiving module 910 is configured to receive a request for applying for an electronic-bill identifier, where the request is initiated by a service node;

The electronic-bill-identifier generation module 930 is configured to generate a set of electronic-bill identifiers in response to the request, where the set of electronic-bill identifiers includes at least one electronic-bill identifier, each of which includes a bill code and a bill number.

The electronic-bill-identifier synchronization module 950 is configured to synchronize, among the distributed system, the at least one electronic-bill identifier in the set of electronic-bill identifiers.

The electronic-bill-identifier allocation module 970 is configured to allocate one of the at least one electronic-bill identifier in the set of electronic-bill identifiers to the service node, after the one of the at least one electronic-bill identifier in the set of electronic-bill identifiers is synchronized among the distributed system.

In one embodiment, the electronic-bill-identifier generation module 930 is configured to generate the set of electronic-bill identifiers according to an issuing quantity of electronic bills, in response to the request for applying for the electronic-bill identifier.

In one embodiment, the electronic-bill-identifier generation module 930 includes, but is not limited to, a bill-code generation unit, a bill-number generation unit, an electronic-bill-identifier obtaining unit, and an electronic-bill-identifier-set generation unit.

The bill-code generation unit is configured to generate a bill code according to a bill issuing rule, in response to the request for applying for the electronic-bill identifier.

The bill-number generation unit is configured to obtain at least one bill number from a range of bill numbers which is set for the processing node, based on the issuing quantity of electronic bills.

The electronic-bill-identifier obtaining unit is configured to obtain an electronic-bill identifier for each bill number, based on the bill code and the bill number.

The electronic-bill-identifier-set generation unit is configured to generate the set of electronic-bill identifiers according to the obtained electronic-bill identifier.

In one embodiment, the bill-code generation unit includes, but is not limited to, an issuing-information determination subunit and an issuing-information encapsulation subunit.

The issuing-information determination subunit is configured to determine issuing information required for an electronic bill according to the bill issuing rule, in response to the request for applying for the electronic-bill identifier.

The issuing-information encapsulation subunit is configured to encapsulate the issuing information as the bill code, according to a sequence of encapsulating the issuing information, where the sequence is indicated by the bill issuing rule.

In one embodiment, the bill-number generation unit includes, but is not limited to, a remaining-bill-number-range determination subunit and a bill-number selection subunit.

The remaining-bill-number-range determination subunit is configured to determine a remaining range of bill numbers from the range of bill numbers set for the processing node.

The bill-number selection subunit is configured to obtain bill numbers, of which a quantity matches with the issuing quantity of electronic bills, from the remaining range of bill numbers.

In one embodiment, the remaining-bill-number-range determination subunit includes, but is not limited to, an unused-number-quantity-determination subunit and a first remaining-bill-number-range forming subunit.

The unused-number-quantity-determination subunit is configured to determine a quantity of unused bill numbers in the range of bill numbers set for the processing node.

The first remaining-bill-number-range forming subunit is configured to form the remaining range of bill numbers, by using all unused bill numbers, in a case that the quantity of the unused bill numbers is not less than the issuing quantity of electronic bills.

In one embodiment, the bill-number selection subunit includes, but is not limited to, a first bill-number definition subunit and a first bill-number-ascending obtaining subunit.

The first bill-number definition subunit is configured to determine a bill number that is smallest among the remaining range of bill numbers, as a first bill number.

The first bill-number-ascending obtaining subunit is configured to obtain the bill numbers of which the quantity matches with the issuing quantity of electronic bills, based on an order of ascending bill numbers, where the order starts from the first bill number and ends when a quantity of the obtained bill numbers reaches the issuing quantity.

In one embodiment, the remaining-bill-number-range determination subunit further includes, but is not limited to, a first unused-bill-number-range forming subunit, a second unused-bill-number-range forming subunit, and a second remaining-bill-number-range forming subunit.

The first unused-bill-number-range forming subunit is configured to form a first unused range of bill numbers, by using all unused bill numbers in a current batch, in a case that the quantity of the unused bill numbers is less than the issuing quantity of electronic bills.

The second unused-bill-number-range forming subunit is configured to update a batch in the bill code, and form a second unused range of bill numbers by using all unused bill numbers in an updated batch.

The second remaining-bill-number-range forming subunit is configured to obtain the remaining range of bill numbers according to the first unused range of bill numbers and the second unused range of bill numbers.

In one embodiment, the bill-number selection subunit includes, but is not limited to, a second bill-number definition subunit, a second bill-number-ascending obtaining subunit, and a third bill-number-ascending obtaining subunit.

The second bill-number definition subunit is configured to determine a bill number that is smallest among the first unused range of bill numbers, as the first bill number.

The second bill-number-ascending obtaining subunit is configured to obtain all bill numbers in the first unused range of bill numbers, based on an order of ascending bill numbers which starts from the first bill number.

The third bill-number-ascending obtaining subunit is configured to obtain bill numbers based on an order of ascending bill numbers, which starts from a bill number smallest among the second unused range of bill numbers and ends when a quantity of all obtained bill numbers reaches the issuing quantity.

In one embodiment, the electronic-bill-identifier synchronization module 950 includes, but is not limited to, a synchronization-request initiation unit, a response-message receiving unit, and an electronic-bill-identifier sending unit.

The synchronization-request initiation unit is configured to initiate, for an electronic-bill identifier in the set of electronic-bill identifiers, a synchronization request toward another processing node in the distributed system, to enable the another processing node in the distributed system to generate a response message for the electronic-bill identifier in response to the synchronization request.

The response-message receiving unit is configured to receive the response message for the electronic-bill identifier, which is reported by the another processing node in the distributed system.

The electronic-bill-identifier sending unit is configured to determine that the electronic-bill identifier is synchronized among the distributed system, and send the synchronized electronic-bill identifier the another processing node in the distributed system, in a case that a quantity of the response message for the electronic-bill identifier is not less than a set threshold.

In one embodiment, the distributed system further includes a proxy node.

Correspondingly, the apparatus 900 further includes, but is not limited to, a processing-node selection module and a request distribution module.

The processing-node selection module is configured to select, through the proxy node, a processing node for receiving the request for applying for the electronic-bill identifier, from processing nodes included in the distributed system.

The request distribution module is configured to distribute the request for applying for the electronic-bill identifier to the selected processing node.

In one embodiment, the processing-node selection module includes, but is not limited to, an operation-data obtaining unit, a physical-distance determination unit, and a processing-node filtering unit.

The operation-data obtaining unit is configured to monitor, through the proxy node, operation states of the processing nodes in the distributed system, to obtain operation data of the processing nodes in the distributed system.

The physical-distance determination unit is configured to determine physical distances between the service node and the processing nodes, respectively, in the distributed system.

The processing-node filtering unit is configured to filter the processing nodes in the distributed system, according to the operation data and the physical distances, to obtain the processing node for receiving the request for applying for the electronic-bill identifier.

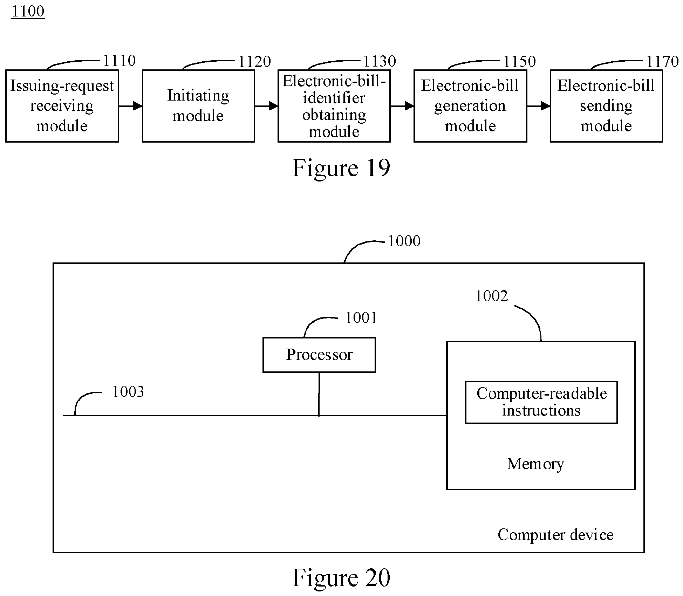

Reference is made to Figure 19. In one embodiment, an apparatus for generating an electronic bill 1100 is provided. The apparatus 1100 is deployed in a service node. The service node interacts with a distributed system, and the distributed system includes a processing node.

The apparatus 1100 includes, but is not limited to, an issuing-request receiving module 1110, an initiating module 1120, an electronic-bill-identifier obtaining module 1130, an electronic-bill generation module 1150, and an electronic-bill sending module 1170.

The issuing-request receiving module 1110 is configured to receive a request for issuing an electronic bill, where the request for issuing an electronic bill is initiated by a request initiator. The issuing-request receiving module 1110 is further configured to obtain bill issuing information from the request for issuing an electronic bill, where the bill issuing information includes an identifier of a recipient and an amount of transferred resources.

The initiating module 1120 is configured to initiate a request for applying for an electronic-bill identifier toward the processing node, according to the request for issuing the electronic bill.

The electronic-bill-identifier obtaining module 1130 is configured to obtain the electronic-bill identifier from a set of electronic-bill identifiers allocated by the processing node, where the set of electronic-bill identifiers is generated by the processing node and synchronized among the distributed system, and the electronic-bill identifier includes a bill code and a bill number.

The electronic-bill generation module 1150 is configured to generate the electronic bill according to the bill issuing information and the obtained electronic-bill identifier.

The electronic-bill sending module 1170 is configured to return the electronic bill to the request initiator in response to the request for issuing the electronic bill.

In one embodiment, a system for generating an electronic-bill is provided. The system includes a request initiator, a service node, and a processing node that is in a distributed system.

The service node initiates a request for applying for an electronic-bill identifier toward the processing node.

The processing node generates a set of electronic-bill identifiers according to an issuing quantity of electronic bills in response to the request for applying for the electronic-bill identifier, synchronizes the set of electronic-bill identifiers among the distributed system, and allocates the electronic-bill identifier in the set of electronic-bill identifiers to the service node, where the electronic-bill identifier includes a bill code and a bill number.

The request initiator initiates a request for issuing an electronic bill toward the service node, where the request for issuing the electronic bill carries bill issuing information, and the bill issuing information includes an identifier of a recipient and an amount of transferred resource.

The service node obtains the electronic-bill identifier from the set of electronic-bill identifiers in response to the request for issuing the electronic bill, generates the electronic bill according to the bill issuing information and the obtained electronic-bill identifier, and returns the electronic bill to the request initiator.

In these embodiments, the apparatuses are divided into the foregoing functional modules, which is merely exemplary for performing processing related to electronic bills. In practice, the foregoing functions may be allocated to different functional modules on requirement. That is, an internal structure of the apparatus is divided into different functional modules, to complete all or a part of the foregoing described functions.

The apparatuses provided in the foregoing embodiments adopt concepts identical to those in the method embodiments. A specific manner of operation of the modules has been described in detail in the method embodiments, which is not described again herein.

Reference is made to Figure 20. In one embodiment, a computer device 1000 is provided. The computer device 1000 includes at least one processor 1001, at least one memory 1002, and at least one communication bus 1003.

The memory 1002 stores computer-readable instructions. The processor 1001 reads, the computer-readable instructions stored in the memory 1002 via the communication bus 1003.

The computer-readable instructions, when executed by the processor 1001, implement the method for allocating the electronic-bill identifier or the method for generating an electronic bill in the foregoing embodiments.

In one embodiment, a storage medium is provided. The storage medium stores a computer program. The computer program, when executed by a processor, implements the method for allocating the electronic-bill identifier or the method for generating the electronic bill in the foregoing embodiments.

In one embodiment, a computer program product is further provided. The computer product includes instructions. The instructions, when run on a server, configure the server to perform the method for allocating the electronic-bill identifier or the method for generating the electronic bill in the foregoing embodiments.

The foregoing description is merely exemplary embodiments of the present disclosure, and is not intended to limit implementations of the present disclosure.

## Claims

1. A method for allocating an electronic-bill identifier, applied to a distributed system comprising processing nodes, wherein the method is performed by a processing node of the processing nodes in the distributed system, and the method comprises:
receiving (310) a request for applying for an electronic-bill identifier, wherein the request is initiated by a service node;
generating (330) a set of electronic-bill identifiers in response to the request, wherein the set of electronic-bill identifiers comprises at least one electronic-bill identifier, each of which comprises a bill code and a bill number;
synchronizing (350), among the distributed system, the at least one electronic-bill identifier in the set of electronic-bill identifiers; and
allocating (370) one of the at least one electronic-bill identifier in the set of electronic-bill identifiers to the service node, after the one of the at least one electronic-bill identifier in the set of electronic-bill identifiers is synchronized among the distributed system;
wherein in each electronic-bill identifier, the bill code represents issuing information required for an electronic bill and is identical among electronic bills in a same batch of issuance, and the bill number is a unique number for identifying the electronic bill among electronic bills in the same batch of issuance;
wherein generating (330) the set of electronic-bill identifiers in response to the request comprises:
generating the set of electronic-bill identifiers according to an issuing quantity of electronic bills, in response to the request;
wherein generating the set of electronic-bill identifiers according to an issuing quantity of electronic bills in response to the request comprises:
generating (331) a bill code according to a bill issuing rule, in response to the request;
obtaining (333) at least one bill number from a part of a range of bill numbers, whereby the part of the range is set for the processing node, based on the issuing quantity of electronic bills;
obtaining (335) an electronic-bill identifier for each bill number, based on the bill code and the bill number; and
generating (337) the set of electronic-bill identifiers according to the obtained electronic-bill identifier;
wherein generating (331) the bill code according to the bill issuing rule in response to the request comprises:
determining (3311) issuing information required for an electronic bill according to the bill issuing rule, in response to the request; and
encapsulating (3313) the issuing information as the bill code, according to a sequence of encapsulating the issuing information, wherein the sequence is indicated by the bill issuing rule; andwherein for each batch of issuance,
bill numbers of electronic-bill identifiers allocated by all processing nodes are located within the range of bill numbers, and bill numbers of electronic-bill identifiers allocated by different processing nodes are located within different parts of the range.

2. The method according to claim 1, wherein obtaining (333) the at least one bill number from the part of the range of bill numbers set for the processing node, based on the issuing quantity of electronic bills, comprises:
determining (3331) a remaining range of bill numbers from the part of the range of bill numbers set for the processing node; and
obtaining (3333) bill numbers, of which a quantity matches with the issuing quantity of electronic bills, from the remaining range of bill numbers.

3. The method according to claim 2, wherein determining (3331) the remaining range of bill numbers from the part of the range of bill numbers set for the processing node comprises:
determining (410) a quantity of unused bill numbers in the part of the range of bill numbers set for the processing node; and
forming (430) the remaining range of bill numbers, by using all unused bill numbers, in a case that the quantity of the unused bill numbers is not less than the issuing quantity of electronic bills.

4. The method according to claim 2 or 3, wherein obtaining (3333) the bill numbers of which the quantity matches with the issuing quantity of electronic bills from the remaining range of bill numbers comprises:
determining (510) a bill number that is smallest among the remaining range of bill numbers, as a first bill number; and
obtaining (530) the bill numbers, of which the quantity matches with the issuing quantity of electronic bills, based on an order of ascending bill numbers, wherein the order starts from the first bill number and ends when a quantity of the obtained bill numbers reaches the issuing quantity.

5. A method for generating an electronic bill, performed by a service node, wherein the service node interacts with a distributed system comprising a processing node, and the method comprises:
receiving (710) a request for issuing an electronic bill, wherein the request for issuing an electronic bill is initiated by a request initiator;
obtaining (710) bill issuing information from the request for issuing an electronic bill, wherein the bill issuing information comprises an identifier of a recipient and an amount of transferred resources;
initiating (720) a request for applying for an electronic-bill identifier toward the processing node, according to the request for issuing the electronic bill;
obtaining (730) the electronic-bill identifier from a set of electronic-bill identifiers that are allocated by the processing node, wherein the set of electronic-bill identifiers is generated by the processing node and synchronized among the distributed system, and the electronic-bill identifier comprises a bill code and a bill number;
generating (750) the electronic bill according to the bill issuing information and the obtained electronic-bill identifier; and
returning (770) the electronic bill to the request initiator in response to the request for issuing the electronic bill;
wherein the bill code represents issuing information required for an electronic bill and is identical among electronic bills in a same batch of issuance, and the bill number is a unique number for identifying the electronic bill among electronic bills in the same batch of issuance;
wherein issuing information required for an electronic bill is determined by the processing node according to a bill issuing rule in response to the request for applying for the electronic-bill identifier, the issuing information is encapsulated as the bill code according to a sequence of encapsulating the issuing information, and the sequence is indicated by the bill issuing rule;
wherein at least one bill number is obtained by the processing node based on the issuing quantity of electronic bills from a part of a range of bill numbers, whereby the part of the range is set for the processing node;
wherein an electronic-bill identifier is obtained by the processing node based on the bill code and the bill number, and the set of electronic-bill identifiers is generated by the processing node according to the obtained electronic-bill identifier; and
wherein bill numbers of electronic-bill identifiers allocated by all processing nodes are located within the range of bill numbers, and bill numbers of electronic-bill identifiers allocated by different processing nodes are located within different parts of the range.

6. An electronic-bill generation system, comprising a request initiator, a service node, and a processing node that is in a distributed system, wherein:
the service node is configured to perform the method according to claim 5;
the processing node is configured to perform the method according to any one of claims 1 to 4; and
the request initiator is configured to initiate the request for issuing the electronic bill toward the service node.

7. A method for distributing requests for applying an electronic-bill identifier, applied to a distributed system comprising a proxy node and processing nodes, wherein the method is performed by the proxy node, and the method comprises:
receiving a request for applying for an electronic-bill identifier, wherein the request is initiated by a service node, and the electronic-bill identifier comprises a bill code and a bill number;
selecting (610) a processing node for receiving the request, from the processing nodes in the distributed system; and
distributing (630) the request to the selected processing node, to enable the processing node to execute a service of allocating the electronic-bill identifier in response to the request;
wherein the bill code represents issuing information required for an electronic bill and is identical among electronic bills in a same batch of issuance, and the bill number is a unique number for identifying the electronic bill among electronic bills in the same batch of issuance;
wherein issuing information required for an electronic bill is determined by the processing node according to a bill issuing rule in response to the request for applying for the electronic-bill identifier, the issuing information is encapsulated as the bill code according to a sequence of encapsulating the issuing information, and the sequence is indicated by the bill issuing rule;
wherein at least one bill number is obtained by the processing node based on the issuing quantity of electronic bills from a part of a range of bill numbers, whereby the part of the range is set for the processing node;
wherein an electronic-bill identifier is obtained by the processing node based on the bill code and the bill number, and the set of electronic-bill identifiers is generated by the processing node according to the obtained electronic-bill identifier; and
wherein bill numbers of electronic-bill identifiers allocated by all processing nodes are located within the range of bill numbers, and bill numbers of electronic-bill identifiers allocated by different processing nodes are located within different parts of the range.

8. The method according to claim 7, wherein selecting (610) the processing node for receiving the request from the processing nodes in the distributed system comprises:
monitoring (611), through the proxy node, operation states of the processing nodes in the distributed system, to obtain operation data of the processing nodes in the distributed system;
determining (613) physical distances between the service node and the processing nodes, respectively, in the distributed system; and
filtering (615) the processing nodes in the distributed system, according to the operation data and the physical distances, to obtain the processing node for receiving the request for applying for the electronic-bill identifier.

9. The electronic-bill generation system according to claim 6 further comprising processing nodes and a proxy node in the distributed system, wherein:
the processing node is one of the processing nodes;
the service node is configured to initiate the request for applying for the electronic-bill identifier toward the processing node, via the proxy node, in response to the request for issuing the electronic bill; and
the proxy node is further configured to:
perform the method according to claim 7 or 8; and
return, to the service node, the electronic-bill identifier allocated by the processing node.

10. A computer device (1000), comprising a processor (1001), a communication interface, a memory (1002), and a communication bus (1003), wherein:
the processor (1001), the communication interface, and the memory (1002) communicate with each other via the communication bus (1003);
the communication interface is an interface of a communication module;
the memory (1002) is configured to store a program code and transmit the program code to the processor (1001); and
the processor (1001) is configured to invoke instructions of the program code in the memory (1002), to perform the method according to any one of claims 1 to 5, 7, and 8.

11. A storage medium, configured to store a computer program, wherein:
the computer program is configured to perform the method according to any one of claims 1 to 5, 7, and 8.

12. A computer program product, comprising instructions, wherein:
the instructions when run on a computer configure the computer to perform the method according to any one of claims 1 to 5, 7, and 8.

## Patentansprüche

1. Verfahren zum Zuweisen einer elektronischen Rechnungskennung, angewendet in einem verteilten System umfassend Verarbeitungsknoten, wobei das Verfahren von einem Verarbeitungsknoten der Verarbeitungsknoten in dem verteilten System ausgeführt wird und das Verfahren umfasst:
Empfangen (310) einer Anforderung zum Beantragen einer elektronischen Rechnungskennung, wobei die Anforderung von einem Dienstknoten initiiert ist;
Erzeugen (330) eines Satzes von elektronischen Rechnungskennungen als Reaktion auf die Anforderung, wobei der Satz von elektronischen Rechnungskennungen mindestens eine elektronische Rechnungskennung umfasst, von denen jede einen Rechnungscode und eine Rechnungsnummer umfasst;
Synchronisieren (350) der mindestens einer elektronischen Rechnungskennung des Satzes von elektronischen Rechnungskennungen in dem verteilten System; und
Zuweisen (370) einer der mindestens einen elektronischen Rechnungskennungen des Satzes von elektronischen Rechnungskennungen zu dem Dienstknoten, nachdem der eine der mindestens einen elektronischen Rechnungskennungen des Satzes von elektronischen Rechnungskennungen in dem verteilten System synchronisiert ist;
wobei in jeder elektronischen Rechnungskennung der Rechnungscode die für eine elektronische Rechnung erforderliche Ausstellungsinformation darstellt und bei elektronischen Rechnungen in einem gleichen Ausstellungsstapel identisch ist, und die Rechnungsnummer eine eindeutige Nummer zur Identifizierung der elektronischen Rechnung unter elektronischen Rechnungen in dem gleichen Ausstellungsstapel ist;
wobei das Erzeugen (330) des Satzes von elektronischen Rechnungskennungen als Reaktion auf die Anforderung umfasst:
Erzeugen des Satzes von elektronischen Rechnungskennungen gemäß einer Ausgabemenge von elektronischen Rechnungen als Reaktion auf die Anforderung;
wobei das Erzeugen des Satzes von elektronischen Rechnungskennungen gemäß einer Ausgabemenge von elektronischen Rechnungen als Reaktion auf die Anforderung umfasst:
Erzeugen (331) eines Rechnungscodes gemäß einer Rechnungsausgaberegel als Reaktion auf die Anforderung;
Erhalten (333) mindestens einer Rechnungsnummer aus einem Teil eines Bereichs von Rechnungsnummern, wobei der Teil des Bereichs für den Verarbeitungsknoten auf der Grundlage der Ausgabemenge elektronischer Rechnungen festgelegt ist;
Erhalten (335) einer elektronischen Rechnungskennung für jede Rechnungsnummer basierend auf dem Rechnungscode und der Rechnungsnummer; und
Erzeugen (337) des Satzes von Kennungen für elektronische Rechnungen gemäß der erhaltenen Kennung für elektronische Rechnungen;
wobei das Erzeugen (331) des Rechnungscodes gemäß der Rechnungsausgaberegel als Reaktion auf die Anforderung Folgendes umfasst:
Bestimmen (3311) der für eine elektronische Rechnung erforderlichen Ausstellungsinformationen gemäß der Rechnungsausgaberegel als Reaktion auf die Anforderung; und
Einkapseln (3313) der Ausstellungsinformationen als Rechnungscode gemäß einer Sequenz des Einkapselns der Ausstellungsinformationen, wobei die Sequenz durch die Rechnungsausgaberegel angegeben ist; und wobei für jeden Ausstellungsstapel,
Rechnungsnummern von elektronischen Rechnungskennungen, die von allen Verarbeitungsknoten zugewiesen sind, innerhalb des Bereichs von Rechnungsnummern liegen und Rechnungsnummern von elektronischen Rechnungskennungen, die von verschiedenen Verarbeitungsknoten zugewiesen sind, innerhalb verschiedener Teile des Bereichs liegen.

2. Verfahren nach Anspruch 1, wobei das Erhalten (333) der mindestens einer Rechnungsnummer aus dem Teil des Bereichs von Rechnungsnummern, der für den Verarbeitungsknoten festgelegt ist, basierend auf der Ausgabemenge von elektronischen Rechnungen umfasst:
Bestimmen (3331) eines verbleibenden Bereichs von Rechnungsnummern aus dem Teil des Bereichs von Rechnungsnummern, der für den Verarbeitungsknoten festgelegt ist; und
Erhalten (3333) von Rechnungsnummern, von denen eine Menge mit der Ausgabemenge elektronischer Rechnungen übereinstimmt, aus dem verbleibenden Bereich von Rechnungsnummern.

3. Verfahren nach Anspruch 2, wobei das Bestimmen (3331) des verbleibenden Bereichs von Rechnungsnummern aus dem Teil des Bereichs von Rechnungsnummern, der für den Verarbeitungsknoten festgelegt ist, umfasst:
Bestimmen (410) einer Menge an ungenutzten Rechnungsnummern in dem Teil des Bereichs an Rechnungsnummern, der für den Verarbeitungsknoten festgelegt ist; und
Bilden (430) des verbleibenden Bereichs von Rechnungsnummern unter Verwendung aller ungenutzten Rechnungsnummern in einem Fall, in dem die Menge an ungenutzten Rechnungsnummern nicht geringer ist als die Ausgabemenge an elektronischen Rechnungen.

4. Verfahren nach Anspruch 2 oder 3, wobei das Erhalten (3333) der Rechnungsnummern, von denen die Menge mit der Ausgabemenge elektronischer Rechnungen aus dem verbleibenden Bereich von Rechnungsnummern übereinstimmt, umfasst:
Bestimmen (510) einer Rechnungsnummer, die die kleinste unter den verbleibenden Rechnungsnummern ist, als eine erste Rechnungsnummer; und
Erhalten (530) der Rechnungsnummern, deren Anzahl mit der Ausgabemenge elektronischer Rechnungen übereinstimmt, basierend auf einer Reihenfolge aufsteigender Rechnungsnummern, wobei die Reihenfolge bei der ersten Rechnungsnummer beginnt und endet, wenn eine Anzahl der erhaltenen Rechnungsnummern die Ausgabemenge erreicht.

5. Verfahren zum Erzeugen einer elektronischen Rechnung, ausgeführt von einem Dienstknoten, wobei der Dienstknoten mit einem verteilten System interagiert, das einen Verarbeitungsknoten umfasst, und das Verfahren umfasst:
Empfangen (710) einer Anforderung zum Ausstellen einer elektronischen Rechnung, wobei die Anforderung zum Ausstellen einer elektronischen Rechnung durch einen Anforderungsinitiator initiiert wird;
Erhalten (710) von Rechnungsausstellungsinformationen aus der Anforderung zum Ausstellen einer elektronischen Rechnung, wobei die Rechnungsausstellungsinformationen einen Identifikator eines Empfängers und einen Betrag übertragener Ressourcen umfassen;
Initiieren (720) einer Anforderung zur Beantragung einer elektronischen Rechnungskennung an den Verarbeitungsknoten gemäß der Anforderung zur Ausstellung der elektronischen Rechnung;
Erhalten (730) der elektronischen Rechnungskennung aus einem Satz elektronischer Rechnungskennungen, die von dem Verarbeitungsknoten zugewiesen sind, wobei der Satz elektronischer Rechnungskennungen von dem Verarbeitungsknoten erzeugt und zwischen dem verteilten System synchronisiert ist und die elektronische Rechnungskennung einen Rechnungscode und eine Rechnungsnummer umfasst;
Erzeugen (750) der elektronischen Rechnung gemäß den Rechnungsausstellungsinformationen und der erhaltenen elektronischen Rechnungskennung; und
Zurückgeben (770) der elektronischen Rechnung an den Anforderungsinitiator als Reaktion auf die Anforderung zum Ausstellen der elektronischen Rechnung;
wobei der Rechnungscode die für eine elektronische Rechnung erforderlichen Ausstellungsinformationen darstellt und bei elektronischen Rechnungen in einem gleichen Ausstellungsstapel identisch ist, und die Rechnungsnummer eine eindeutige Nummer zur Identifizierung der elektronischen Rechnung unter elektronischen Rechnungen in dem gleichen Ausstellungsstapel ist;
wobei die für eine elektronische Rechnung erforderlichen Ausstellungsinformationen durch den Verarbeitungsknoten gemäß einer Rechnungsausgaberegel als Reaktion auf die Anforderung zur Beantragung der Kennung für elektronische Rechnungen bestimmt werden, die Ausstellungsinformationen gemäß einer Sequenz der Einkapselung der Ausstellungsinformationen als Rechnungscode eingekapselt sind und die Sequenz durch die Rechnungsausgaberegel angegeben ist;
wobei mindestens eine Rechnungsnummer von dem Verarbeitungsknoten auf der Grundlage der Ausstellungsmenge elektronischer Rechnungen aus einem Teil eines Bereichs von Rechnungsnummern erhalten ist, wobei der Teil des Bereichs für den Verarbeitungsknoten festgelegt ist;
wobei eine elektronische Rechnungskennung von dem Verarbeitungsknoten auf der Grundlage des Rechnungscodes und der Rechnungsnummer erhalten wird und der Satz elektronischer Rechnungskennungen von dem Verarbeitungsknoten gemäß der erhaltenen elektronischen Rechnungskennung erzeugt ist; und
wobei Rechnungsnummern von elektronischen Rechnungskennungen, die von allen Verarbeitungsknoten zugewiesen sind, innerhalb des Bereichs von Rechnungsnummern liegen und Rechnungsnummern von elektronischen Rechnungskennungen, die von verschiedenen Verarbeitungsknoten zugewiesen sind, innerhalb verschiedener Teile des Bereichs liegen.

6. System zur Erzeugung elektronischer Rechnungen, das einen Anforderungsinitiator, einen Dienstknoten und einen Verarbeitungsknoten umfasst, der sich in einem verteilten System befindet, wobei:
der Dienstknoten so konfiguriert ist, dass er das Verfahren gemäß Anspruch 5 ausführt;
der Verarbeitungsknoten so konfiguriert ist, dass er das Verfahren gemäß einem der Ansprüche 1 bis 4 ausführt; und
der Anforderungsinitiator so konfiguriert ist, dass er die Anforderung zur Ausstellung der elektronischen Rechnung an den Dienstknoten initiiert.

7. Verfahren zum Verteilen von Anforderungen zum Anwenden einer elektronischen Rechnungskennung, angewendet auf ein verteiltes System, das einen Proxyknoten und Verarbeitungsknoten umfasst, wobei das Verfahren durch den Proxyknoten ausgeführt wird und das Verfahren umfasst:
Empfangen einer Anforderung zum Anwenden einer elektronischen Rechnungskennung, wobei die Anforderung durch einen Dienstknoten initiiert wird und die elektronische Rechnungskennung einen Rechnungscode und eine Rechnungsnummer umfasst;
Auswählen (610) eines Verarbeitungsknotens zum Empfangen der Anforderung aus den Verarbeitungsknoten in dem verteilten System; und
Verteilen (630) der Anforderung an den ausgewählten Verarbeitungsknoten, um den Verarbeitungsknoten in die Lage zu versetzen, einen Dienst zum Zuweisen der elektronischen Rechnungskennung als Reaktion auf die Anforderung auszuführen;
wobei der Rechnungscode für eine elektronische Rechnung erforderliche Ausgabedaten darstellt und bei elektronischen Rechnungen in einem gleichen Ausstellungsstapel identisch ist und die Rechnungsnummer eine eindeutige Nummer zum Identifizieren der elektronischen Rechnung unter elektronischen Rechnungen in dem gleichen Ausstellungsstapel ist;
wobei die für eine elektronische Rechnung erforderlichen Ausstellungsinformationen durch den Verarbeitungsknoten gemäß einer Rechnungsausstellungsregel als Reaktion auf die Anforderung zur Beantragung der elektronischen Rechnungskennung bestimmt sind, die Ausstellungsinformationen gemäß einer Sequenz der Einkapselung der Ausstellungsinformationen als Rechnungscode eingekapselt sind und die Sequenz durch die Rechnungsausstellungsregel angegeben ist;
wobei mindestens eine Rechnungsnummer von dem Verarbeitungsknoten basierend auf der Ausgabemenge elektronischer Rechnungen aus einem Teil eines Bereichs von Rechnungsnummern erhalten ist, wobei der Teil des Bereichs für den Verarbeitungsknoten festgelegt ist;
wobei eine elektronische Rechnungskennung von dem Verarbeitungsknoten basierend auf dem Rechnungscode und der Rechnungsnummer erhalten ist und der Satz elektronischer Rechnungskennungen von dem Verarbeitungsknoten gemäß der erhaltenen elektronischen Rechnungskennung erzeugt ist; und
wobei Rechnungsnummern von elektronischen Rechnungskennungen, die von allen Verarbeitungsknoten zugewiesen sind, innerhalb des Bereichs von Rechnungsnummern liegen und Rechnungsnummern von elektronischen Rechnungskennungen, die von verschiedenen Verarbeitungsknoten zugewiesen sind, innerhalb verschiedener Teile des Bereichs liegen.

8. Verfahren nach Anspruch 7, wobei das Auswählen (610) des Verarbeitungsknotens zum Empfangen der Anforderung von den Verarbeitungsknoten in dem verteilten System umfasst:
Überwachen (611) von Betriebszuständen der Verarbeitungsknoten in dem verteilten System durch den Proxy-Knoten, um Betriebsdaten der Verarbeitungsknoten in dem verteilten System zu erhalten;
Bestimmen (613) physischer Entfernungen zwischen dem Dienstknoten und den Verarbeitungsknoten in dem verteilten System; und
Filtern (615) der Verarbeitungsknoten in dem verteilten System gemäß den Betriebsdaten und den physischen Abständen, um den Verarbeitungsknoten zum Empfangen der Anforderung zum Beantragen der Kennung für elektronische Rechnungen zu erhalten.

9. System zur Erzeugung elektronischer Rechnungen nach Anspruch 6, umfassend ferner Verarbeitungsknoten und einen Proxyknoten in dem verteilten System, wobei:
der Verarbeitungsknoten einer der Verarbeitungsknoten ist;
der Dienstknoten so konfiguriert ist, dass er die Anforderung zur Beantragung der elektronischen Rechnungskennung an den Verarbeitungsknoten über den Proxyknoten als Reaktion auf die Anforderung zur Ausstellung der elektronischen Rechnung initiiert; und
der Proxyknoten ferner so konfiguriert ist, dass er
das Verfahren gemäß Anspruch 7 oder 8 ausführt; und
die vom Verarbeitungsknoten zugewiesene elektronische Rechnungskennung an den Dienstknoten zurückgibt.

10. Computergerät (1000), das einen Prozessor (1001), eine Kommunikationsschnittstelle, einen Speicher (1002) und einen Kommunikationsbus (1003) umfasst, wobei:
der Prozessor (1001), die Kommunikationsschnittstelle und der Speicher (1002) über den Kommunikationsbus (1003) miteinander kommunizieren;
die Kommunikationsschnittstelle eine Schnittstelle eines Kommunikationsmoduls ist;
der Speicher (1002) so konfiguriert ist, dass er einen Programmcode speichert und den Programmcode an den Prozessor (1001) überträgt; und
der Prozessor (1001) so konfiguriert ist, dass er Anweisungen des Programmcodes im Speicher (1002) aufruft, um das Verfahren gemäß einem der Ansprüche 1 bis 5, 7 und 8 auszuführen.

11. Speichermedium, das zum Speichern eines Computerprogramms konfiguriert ist, wobei:
das Computerprogramm zum Ausführen des Verfahrens gemäß einem der Ansprüche 1 bis 5, 7 und 8 konfiguriert ist.

12. Computerprogrammprodukt, das Anweisungen umfasst, wobei:
die Anweisungen, wenn sie auf einem Computer ausgeführt werden, den Computer zum Ausführen des Verfahrens gemäß einem der Ansprüche 1 bis 5, 7 und 8 konfigurieren.

## Revendications

1. Procédé d'attribution d'un identifiant de facture électronique, appliqué à un système distribué comprenant des nœuds de traitement, le procédé étant mis en œuvre par un nœud de traitement parmi les nœuds de traitement dans le système distribué et le procédé comprenant:
la réception (310) d'une requête d'application pour un identifiant de facture électronique, la requête étant initiée par un nœud de service;
la génération (330) d'un ensemble d'identifiants de facture électronique en réponse à la requête, l'ensemble d'identifiants de facture électronique comprenant au moins un identifiant de facture électronique, dont chacun comprend un code de facture et un numéro de facture;
la synchronisation (350), parmi le système distribué, du ou des identifiants de facture électronique dans l'ensemble d'identifiants de facture électronique; et
l'attribution (370) d'un identifiant parmi le ou les identifiants de facture électronique dans l'ensemble d'identifiants de facture électronique au nœud de service, après la synchronisation dudit un identifiant parmi le ou les identifiants de facture électronique dans l'ensemble d'identifiants de facture électronique parmi le système distribué;
dans lequel, dans chaque identifiant de facture électronique, le code de facture représente des informations d'émission requises pour une facture électronique et est identique parmi des factures électroniques dans un même lot d'émission et le numéro de facture est un numéro unique permettant d'identifier la facture électronique parmi des factures électroniques dans le même lot d'émission;
la génération (330) de l'ensemble d'identifiants de facture électronique en réponse à la requête comprenant:
la génération de l'ensemble d'identifiants de facture électronique en fonction d'une quantité d'émission de factures électroniques, en réponse à la requête;
la génération de l'ensemble d'identifiants de facture électronique en fonction d'une quantité d'émission de factures électroniques en réponse à la requête comprenant:
la génération (331) d'un code de facture en fonction d'une règle d'émission de facture, en réponse à la requête;
l'obtention (333) d'au moins un numéro de facture à partir d'une partie d'une plage de numéros de facture, la partie de la plage étant définie pour le nœud de traitement, sur la base de la quantité d'émission de factures électroniques;
l'obtention (335) d'un identifiant de facture électronique pour chaque numéro de facture, sur la base du code de facture et du numéro de facture; et
la génération (337) de l'ensemble d'identifiants de facture électronique en fonction de l'identifiant de facture électronique obtenu;
la génération (331) du code de facture en fonction de la règle d'émission de facture en réponse à la requête comprenant:
la détermination (3311) d'informations d'émission requises pour une facture électronique en fonction de la règle d'émission de facture, en réponse à la requête; et
l'encapsulation (3313) des informations d'émission en tant que code de facture, en fonction d'une séquence d'encapsulation des informations d'émission, la séquence étant indiquée par la règle d'émission de facture ; et pour chaque lot d'émission,
les numéros de facture d'identifiants de facture électronique attribués par tous les nœuds de traitement étant situés dans la plage de numéros de facture et les numéros de facture d'identifiants de facture électronique attribués par différents nœuds de traitement étant situés dans différentes parties de la plage.

2. Procédé selon la revendication 1, l'obtention (333) du ou des numéros de facture à partir de la partie de la plage de numéros de facture définie pour le nœud de traitement, sur la base de la quantité d'émission de factures électroniques, comprenant:
la détermination (3331) d'une plage restante de numéros de facture à partir de la partie de la plage de numéros de facture définie pour le nœud de traitement; et
l'obtention (3333) de numéros de facture, dont une quantité correspond à la quantité d'émission de factures électroniques, à partir de la plage restante de numéros de facture.

3. Procédé selon la revendication 2, la détermination (3331) de la plage restante de numéros de facture à partir de la partie de la plage de numéros de facture définie pour le nœud de traitement comprenant:
la détermination (410) d'une quantité de numéros de facture inutilisés dans la partie de la plage de numéros de facture définie pour le nœud de traitement; et
la formation (430) de la plage restante de numéros de factures, à l'aide de tous les numéros de factures inutilisés, dans un cas où la quantité des numéros de factures inutilisés n'est pas inférieure à la quantité d'émission de factures électroniques.

4. Procédé selon la revendication 2 ou 3, l'obtention (3333) des numéros de facture dont la quantité correspond à la quantité d'émission de factures électroniques à partir de la plage restante de numéros de facture comprenant:
la détermination (510) d'un numéro de facture qui est le plus petit parmi la plage restante de numéros de facture, en tant que premier numéro de facture; et
l'obtention (530) des numéros de facture, dont la quantité correspond à la quantité d'émission de factures électroniques, sur la base d'un ordre de numéros de facture ascendants, l'ordre commençant à partir du premier numéro de facture et se terminant lorsqu'une quantité des numéros de facture obtenus atteint la quantité d'émission.

5. Procédé de génération d'une facture électronique, mis en œuvre par un nœud de service, le nœud de service interagissant avec un système distribué comprenant un nœud de traitement et le procédé comprenant:
la réception (710) d'une requête d'émission d'une facture électronique, la requête d'émission d'une facture électronique étant initiée par un initiateur de requête;
l'obtention (710) d'informations d'émission de facture à partir de la requête d'émission d'une facture électronique, les informations d'émission de facture comprenant un identifiant d'un destinataire et une quantité de ressources transférées;
l'initiation (720) d'une requête d'application pour un identifiant de facture électronique vers le nœud de traitement, en fonction de la requête d'émission de la facture électronique;
l'obtention (730) de l'identifiant de facture électronique à partir d'un ensemble d'identifiants de facture électronique qui sont attribués par le nœud de traitement, l'ensemble d'identifiants de facture électronique étant généré par le nœud de traitement et synchronisé parmi le système distribué et l'identifiant de facture électronique comprenant un code de facture et un numéro de facture;
la génération (750) de la facture électronique en fonction des informations d'émission de facture et de l'identifiant de facture électronique obtenu; et
le renvoi (770) de la facture électronique à l'initiateur de requête en réponse
à la requête d'émission de la facture électronique;
le code de facture représentant des informations d'émission requises pour une facture électronique et étant identique parmi des factures électroniques dans un même lot d'émission et le numéro de facture étant un numéro unique permettant d'identifier la facture électronique parmi des factures électroniques dans le même lot d'émission;
les informations d'émission requises pour une facture électronique étant déterminées par le nœud de traitement en fonction d'une règle d'émission de facture en réponse à la requête d'application pour l'identifiant de facture électronique, les informations d'émission étant encapsulées en tant que code de facture en fonction d'une séquence d'encapsulation des informations d'émission et la séquence étant indiquée par la règle d'émission de facture;
au moins un numéro de facture étant obtenu par le nœud de traitement sur la base de la quantité d'émission de factures électroniques à partir d'une partie d'une plage de numéros de facture, la partie de la plage étant définie pour le nœud de traitement;
un identifiant de facture électronique étant obtenu par le nœud de traitement sur la base du code de facture et du numéro de facture et l'ensemble d'identifiants de facture électronique étant généré par le nœud de traitement en fonction de l'identifiant de facture électronique obtenu; et
les numéros de facture d'identifiants de facture électronique attribués par tous les nœuds de traitement étant situés dans la plage de numéros de facture et les numéros de facture d'identifiants de facture électronique attribués par différents nœuds de traitement étant situés dans différentes parties de la plage.

6. Système de génération de factures électroniques, comprenant un initiateur de requête, un nœud de service et un nœud de traitement qui est dans un système distribué:
le nœud de service étant configuré pour mettre en œuvre le procédé selon la revendication 5;
le nœud de traitement étant configuré pour mettre en œuvre le procédé selon l'une quelconque des revendications 1 à 4; et
l'initiateur de requête étant configuré pour initier la requête d'émission de la facture électronique vers le nœud de service.

7. Procédé de distribution de requêtes d'application d'un identifiant de facture électronique, appliqué à un système distribué comprenant un nœud mandataire et des nœuds de traitement, le procédé étant mis en œuvre par le nœud mandataire et le procédé comprenant:
la réception d'une requête d'application pour un identifiant de facture électronique, la requête étant initiée par un nœud de service et l'identifiant de facture électronique comprenant un code de facture et un numéro de facture;
la sélection (610) d'un nœud de traitement destiné à recevoir la requête à partir des nœuds de traitement dans le système distribué; et
la distribution (630) de la requête au nœud de traitement sélectionné, afin de permettre au nœud de traitement d'exécuter un service d'attribution de l'identifiant de facture électronique en réponse à la requête;
le code de facture représentant des informations d'émission requises pour une facture électronique et étant identique parmi des factures électroniques dans un même lot d'émission et le numéro de facture étant un numéro unique permettant d'identifier la facture électronique parmi des factures électroniques dans le même lot d'émission;
les informations d'émission requises pour une facture électronique étant déterminées par le nœud de traitement en fonction d'une règle d'émission de facture en réponse à la requête d'application pour l'identifiant de facture électronique, les informations d'émission étant encapsulées en tant que code de facture en fonction d'une séquence d'encapsulation des informations d'émission et la séquence étant indiquée par la règle d'émission de facture;
au moins un numéro de facture étant obtenu par le nœud de traitement sur la base de la quantité d'émission de factures électroniques à partir d'une partie d'une plage de numéros de facture, la partie de la plage étant définie pour le nœud de traitement;
un identifiant de facture électronique étant obtenu par le nœud de traitement sur la base du code de facture et du numéro de facture et l'ensemble d'identifiants de facture électronique étant généré par le nœud de traitement en fonction de l'identifiant de facture électronique obtenu; et
les numéros de facture d'identifiants de facture électronique attribués par tous les nœuds de traitement étant situés dans la plage de numéros de facture et les numéros de facture d'identifiants de facture électronique attribués par différents nœuds de traitement étant situés dans différentes parties de la plage.

8. Procédé selon la revendication 7, la sélection (610) du nœud de traitement destiné à recevoir la requête à partir des nœuds de traitement dans le système distribué comprenant:
la surveillance (611), par l'intermédiaire du nœud mandataire, d'états de fonctionnement des nœuds de traitement dans le système distribué, afin d'obtenir des données de fonctionnement des nœuds de traitement dans le système distribué;
la détermination (613) de distances physiques entre le nœud de service et les nœuds de traitement, respectivement, dans le système distribué; et
le filtrage (615) des nœuds de traitement dans le système distribué, en fonction des données de fonctionnement et des distances physiques, afin d'obtenir le nœud de traitement permettant de recevoir la requête d'application pour l'identifiant de facture électronique.

9. Système de génération de factures électroniques selon la revendication 6, comprenant en outre des nœuds de traitement et un nœud mandataire dans le système distribué:
le nœud de traitement étant l'un des nœuds de traitement;
le nœud de service étant configuré pour initier la requête d'application pour l'identifiant de facture électronique vers le nœud de traitement, par l'intermédiaire du nœud mandataire, en réponse à la requête d'émission de la facture électronique; et
le nœud mandataire étant en outre configuré pour:
mettre en œuvre le procédé selon la revendication 7 ou 8; et
renvoyer, au nœud de service, l'identifiant de facture électronique attribué par le nœud de traitement.

10. Dispositif informatique (1000), comprenant un processeur (1001), une interface de communication, une mémoire (1002) et un bus de communication (1003):
le processeur (1001), l'interface de communication et la mémoire (1002) communiquant les uns avec les autres par l'intermédiaire du bus de communication (1003);
l'interface de communication étant une interface d'un module de communication;
la mémoire (1002) étant configurée pour enregistrer un code de programme et transmettre le code de programme au processeur (1001); et
le processeur (1001) étant configuré pour appeler des instructions du code de programme dans la mémoire (1002), afin de mettre en œuvre le procédé selon l'une quelconque des revendications 1 à 5, 7 et 8.

11. Support d'enregistrement, configuré pour enregistrer un programme informatique:
le programme informatique étant configuré pour mettre en œuvre le procédé selon l'une quelconque des revendications 1 à 5, 7 et 8.

12. Produit programme d'ordinateur, comprenant des instructions:
les instructions, lorsqu'elles tournent sur un ordinateur, configurant l'ordinateur afin de mettre en œuvre le procédé selon l'une quelconque des revendications 1 à 5, 7 et 8.
